Europäisches Patentamt

European Patent Office

Office européen des brevets

(19)

(11) EP 1 376 298 A2

(12) EUROPEAN PATENT APPLICATION

(43) Date of publication:
02.01.2004 Bulletin 2004/01

(51) Int Cl.$^7$: G06F 1/00

(21) Application number: 03002525.8

(22) Date of filing: 05.02.2003

(84) Designated Contracting States:
AT BE BG CH CY CZ DE DK EE ES FI FR GB GR
HU IE IT LI LU MC NL PT SE SI SK TR
Designated Extension States:
AL LT LV MK RO

(30) Priority: 28.06.2002 JP 2002190023

(71) Applicant: FUJITSU LIMITED
Kawasaki-shi, Kanagawa 211-8588 (JP)

(72) Inventors:
• Nakada, Masahiro
Kawasaki-shi, Kanagawa 211-8588 (JP)

• Sato, Noriyuki
Kawasaki-shi, Kanagawa 211-8588 (JP)
• Okitsu, Hiroyuki
Kawasaki-shi, Kanagawa 211-8588 (JP)
• Seino, Hiroyuki
Kawasaki-shi, Kanagawa 211-8588 (JP)
• Kudo, Yoshiyuki
Kawasaki-shi, Kanagawa 211-8588 (JP)

(74) Representative: Sunderland, James Harry et al
Haseltine Lake & Co.,
Imperial House,
15-19 Kingsway
London WC2B 6UD (GB)

(54) **Information storage apparatus, information processing system, specific number generating method and specific number generating program**

(57) To protect secrecy of information processed by a computer system by performing access control and encryption by using a group identifier as a key, an information storage (1) of the computer system includes an arithmetic processing unit (2) which generates a specific number (ID) for identifying the information storage (1) through parameter arithmetic on the basis of medium information (DD) which identifies definitely a data storing medium and specific information (SD) obtained by grouping environment information on a per species basis. The specific number (ID) is stored in a nonvolatile memory (6) or an information recording medium (7) as the group identifier (ID). An information recording medium control unit (5) manages the information on a per group basis on the basis of the specific number (ID). Information can be laid open in personal computers belonging to a same group while being protected from leakage to third party.

FIG. 1

EP 1 376 298 A2

**Description**

BACKGROUND OF THE INVENTION

Field of the Invention

The present invention generally relates to an information storage apparatus (also referred to simply as the information storage) which is capable of storing information or data used in an information processing system such as a personal computer or the like. More particularly, the present invention is concerned with an information storage apparatus, an information processing system, a specific number generating method and a specific number generating program capable of preventing positively the leakage of information or data through illegal access to the information processing system, unauthorized or illegal disposal such as stealing of hard disks or the like by generating a specific number such as identification (ID) number which can ensure the security for the secrecy of the information used in the information processing system.

Description of Related Art

In recent years, there have been developed for practical applications a variety of security systems and authentication systems with a view to preventing information leakage due to illegal or unauthorized access to the information processing system such as the personal computer or the like, illegal handling of hard disks such as stealing thereof, etc.. In the hitherto known or conventional information processing systems, such security system and authentication system as mentioned above have been realized by allocating different media identification (ID) numbers to the hard disks, respectively, on a system-by-system basis and encrypting the information by using the respective media identification numbers or alternatively by assigning a common identification number defined fixedly in advance commonly to a plurality of hard disks of plural information processing systems and by adopting a common encryption scheme. By virtue of such measures as mentioned above, the security or secrecy of the information can certainly be protected so long as the media identification number remains unknown even in the case where the information retained internally of the information processing system is stolen through illegal access or the information is illegally read out e.g. stolen from the hard disk of the disassembled information processing system or even in the case where the hard disk itself is stolen from the information processing system.

As the conventional technique for ensuring the security for the secrecy of information as described above, there may be mentioned the one described, for example, in Japanese Patent Application Laid-Open Publication No. 289781/1994. According to the teaching disclosed in this publication, it is proposed that in order to make decision as to whether or not an information processing system connected to a center station of hierarchically higher rank is a justifiable one, a random number sent from the center station to the information processing system is processed by a predetermined method, whereon data resulting from the processing of the random number is sent back to the center station with an authenticator being affixed. Upon reception of the data at the center station, the data as received is analyzed for making decision as to whether or not the authenticator is acceptable, to thereby determine whether the information processing system concerned is authorized one or not.

Further, in Japanese Patent Application Laid-Open Publication No. 35462/1993, there is disclosed a technique for allowing a computer system to make access to the data stored in a hard disk when an access key sent from the computer system coincides with the access key retained in the hard disk.

Furthermore, in Japanese Patent Application Laid-Open Publication No. 134311/1997, such a technique is disclosed according to which a system identifier (ID) is written in a storage medium such as a hard disk so that only the information processing system imparted with a relevant or corresponding system identifier (ID) is allowed to read out or decode (decrypt) the information written in the hard disk. With these known techniques, the security or secrecy of the information written in the hard disk can certainly be ensured because it is practically impossible to decode or decrypt the information written in the hard disk even if it was stolen.

As is apparent from the above, with the conventional techniques concerning the security system adopted widely, the contents the copyright of which is to be protected are encrypted and decrypted or decoded with the aid of the media identification (ID) number imparted to each information storage such as the hard disk. In this conjunction, it is however noted that there exists such sort of information as exemplified by documents handled in an office or a company which must be offered for perusal freely internally of the office or company while protecting the information from improvident disclosure to the outsiders or third parties. In that case, when the information is to be encrypted by using the media identification number imparted to the hard disk of each information processing system, then much complicated processing procedure will be involved when a document or information is handed over from the creator thereof to a peruser because the information must then be encrypted with the media identification number imparted to the destination hard disk. In other words, in the case where the media identification numbers are imparted to the information storages such as the hard disks on a one-by-one basis, it becomes necessary to provide specific software for the information storages, respectively, for the purpose of encryption/decryption and/or for executing encryption/ decryption processings through complicated manipulation procedure, which will incur inexpensiveness of the information processing system as well as degradation in the user-friendliness thereof.

On the other hand, in the case where an inherent media identification number defined in advance is used in common to a plurality of information processing systems (i.e., when a fixed common identification number is shared by a plurality of information processing systems), encryption of the information with the destination identifying number can be avoided. However, because the media identification number is "a previously defined number", encryption of the information with the aid of the media identification number becomes meaningless when the media identification number is known to a malicious third party. Further, when only one inherent media identification number is available, for example, in a whole group or company, the encryption is performed with one common media identification number throughout the whole group or company. In that case, it will become very difficult to manage individually and separately the shared information pertinent to the company, departments, divisions, sections, etc. thereof, respectively. Besides, great difficulty will be encountered in managing the data with desired secrecy on a per-department or per-section basis. To say in another way, since the information which can be laid open to all the members of a company on one hand and the information whose publication is limited on a per-division or per-section basis must be managed differently and separatively by using the different media identification numbers, respectively, there arises inconvenience similar to the case where the media identification number must be imparted to the information storage on a one-by-one basis as mentioned above.

SUMMARY OF THE INVENTION

In the light of the state of the art described above, it is an object of the present invention to provide an information storage apparatus which is capable of realizing both information disclosure and information secrecy/security protection in a flexible manner in correspondence to groups classified hierarchically by executing a predetermined processing procedure by means of a processor unit incorporated in the information storage apparatus to thereby generate a group identifier (specific number) which can be employed as a key for effectuating access control as well as encryption and/or decryption of data or information.

Another object of the present invention is to provide an information processing system which includes the information storage apparatus (also referred to as the information storage) mentioned above.

It is yet another object of the present invention to provide a method of generating a specific number (group identifier) corresponding to the key information mentioned above.

It is yet another object of the present invention to provide a program designed to be executed by a computer for carrying out the method mentioned just above.

In view of the above and other objects which will become apparent as the description proceeds, there is provided according to an aspect of the present invention an information storage apparatus designed for storing data used in an information processing system, which apparatus includes an intra-storage information storing means for storing information concerning the information storage apparatus, and a specific number generating means for generating a specific number (identifier) used for ensuring security of the data on the basis of the information concerning the information storage apparatus as stored in the intra-storage information storing means and specific information as inputted.

By virtue of the arrangement of the information storage apparatus described above, the data can be encrypted by using the specific number as the group identifier, allowing the data to be perused freely within a pertinent group while protecting the data from being leaked to the third party for whom the specific number remains unknown. Incidentally, the phrase "information storage" as well as "information storage apparatus" encompasses the storage whose storing medium is removable.

Further, in the information storage apparatus according to the present invention, the specific number can be made use of for encryption and decryption of data or for controlling access to the data. Furthermore, the specific information may be prepared by grouping environment information of the information processing system on a per predetermined species basis or alternatively system environment information of a group using the information processing system may be used as the specific information.

By virtue of the feature described above, the specific numbers may be prepared as group identifiers of the groups such as a whole company, department, division and section, respectively, wherein data encryption/decryption may be performed in each group by using the respective pertinent specific number (group identifier). Thus, disclosure and secrecy protection of the data and information can be realized on a group-by-group basis.

Besides, in the information storage apparatus according to the present invention, the specific information may be file information held by a file itself reserved in the information storage apparatus. By way of example, the specific number may be created on a file-by-file basis by using the file information possessed by the personal computers and used as the group identifier. Thus, within the group in which a common file or files are used, the data can be laid open while preventing leakage to the outsiders.

Additionally, in the information storage apparatus according to the present invention, the specific information may be definition information defined arbitrarily by the user of the information processing system. By way of example, let's suppose a group of persons of similar tastes interested in the personal computer. In that case, the group identifier, i.e., the specific number, may be created on the basis of the file information contained in the computers of these persons. By using this group identifier, interaction of the file information can be performed among the members of the group while preventing leakage of the information to the outsiders.

Moreover, in the information storage apparatus according to the present invention, the information storage apparatus may be imparted with a function for sending to the information processing system the specific number added with unauthorized alteration/modification preventing information for detecting unauthorized alteration or falsification of the specific number. Further, the specific number may be provided with an encryption key for randomizing the data on the basis of the specific number.

Owing to the feature described above, data can be transferred in a randomized form among the personal computers belonging to the group such as mentioned above, whereby enhanced security can be ensured for the data on a per group basis.

Further, in the information storage apparatus according to the present invention, a plurality of the file information can be held in a single file. Furthermore, a plurality of specific numbers may be generated on the basis of the plurality of file information held in the single file, and access control may be performed for a desired file on the basis of the relevant one of the plural specific numbers.

With the arrangement described above, there may be provided a pair of information files, i.e., read-oriented information file and write-oriented information file, to thereby manage security separately for data reading and data writing, respectively. Parenthetically, the information concerning the information storage apparatus may be constituted by an identification number inherent to a storing medium destined for data recording.

According to another aspect of the present invention, there is provided an information processing system equipped with an information storage apparatus for storing data, wherein the information storage apparatus includes an intra-storage information storing means for storing information concerning the information storage apparatus, and a specific number generating means for generating a specific number used for ensuring security of the data on the basis of the information concerning the information storage apparatus as stored in the intra-storage information storing means and specific information as inputted.

In that case, the specific number may be made use of for encryption and decryption of the data or for controlling access to the data. The information processing system may be equipped with a plurality of the information storage apparatuses. At this juncture, it should be added that the phrase "information processing system" encompasses a system, apparatus, device or the like in which a CPU is installed. Thus, a personal computer, a portable phone, a PDA (Personal Digital Assistant) and the like are intended to be covered by the phrase "information processing system".

Further, according to yet another aspect of the present invention, there is proposed a specific number generating method of generating a specific number used for ensuring security of data, which method is carried out by an information storage apparatus capable of storing data used in an information processing system and includes a step of reading out information concerning the information storage apparatus, and a step of generating a specific number used for protecting secrecy on the basis of the read-out information concerning the information storage apparatus and specific information as inputted.

Furthermore, there is proposed according to a further aspect of the present invention a method of generating a specific number used for ensuring security of data in an information processing system comprised of a host and an information storage apparatus capable of storing the data, which method includes a step of sending specific information to an information storage apparatus from a host, a step of receiving the specific information by the information storage apparatus to thereby generate the specific number on the basis of the specific information and information concerning the information storage apparatus and stored in the information storage apparatus, and a step of sending the generated specific number to the host.

Additionally, according to yet another aspect of the present invention, there is proposed a specific number generating program recorded on a computer-readable storing medium for the purpose of generating a specific number used for ensuring security of data, which program is executed by a computer provided in association with an information storage apparatus capable of storing data used in an information processing system and which includes a step of reading out the information concerning the information storage apparatus, and a step of generating a predetermined specific number on the basis of the read-out information concerning the information storage apparatus and specific information as inputted.

Moreover, there is proposed according to still another aspect of the present invention a specific number generating program which is executed by a computer incorporated in an information processing system comprised of a host and an information storage apparatus capable of storing data for generating a specific number used for ensuring security of data, which program is recorded on a storing medium readable with the computer and which includes a step of sending specific information to the information storage apparatus from the host, a step of receiving the specific information by the information storage apparatus to thereby generate the specific number on the basis of the specific information and information concerning the information storage apparatus and stored in the information storage apparatus, and a step of sending the generated specific number to the host.

The above and other objects, features and attendant advantages of the present invention will more easily be understood by reading the following description of the preferred embodiments thereof taken, only by way of example, in conjunction with the accompanying drawings.

BRIEF DESCRIPTION OF THE DRAWINGS

In the course of the description which follows, reference is made to the drawings, in which:

Fig. 1 is a schematic block diagram showing generally a configuration of an information storage apparatus according to a first embodiment of the present invention;
Fig. 2 is a block diagram showing schematically and generally a configuration of an information processing system in which the information storage apparatus according to the first embodiment of the invention is employed;
Fig. 3 is a flow chart for illustrating a processing procedure for generating a specific number for specifying discriminatively the information storage apparatus in the information processing system shown in Fig. 2;
Fig. 4 is a view showing several examples of the specific numbers generated through the processing procedure illustrated in Fig. 3;
Fig. 5 is a flow chart for illustrating a processing procedure for generating the specific number by making use of group information as specific information according to a second embodiment of the present invention;
Fig. 6 is a flow chart for illustrating a processing procedure for generating the specific number by making use of file information as the specific information according to a third embodiment of the present invention;
Fig. 7 is a view showing several examples of the specific numbers generated by making use of the file information (file names) as the specific information according to the third embodiment of the invention;
Figs. 8A and 8B are views for illustrating, by way of example, a file structure when the specific information of individual files is held by a different file;
Fig. 9 is a flow chart for illustrating a processing procedure for generating a specific number by making use of the specific information reserved in the different or separate file such as shown in Fig. 8B;
Fig. 10 is a view showing several examples of the specific numbers generated by making use of the specific information reserved in the separate file;
Fig. 11 is a block diagram showing a personal computer system which constitutes the information processing system and which is imparted with an unauthorized alteration/ modification (falsification) preventing information for detecting unauthorized alteration/modification according to a fourth embodiment of the present invention;
Fig. 12 is a flow chart for illustrating a processing procedure for generating the specific number in the case where unauthorized alteration/modification preventing information is added for detecting the unauthorized alteration/modification in the personal computer system shown in Fig. 11;
Fig. 13 is a flow chart for illustrating encryption processing of data in which a specific number specifying the information storage apparatus is made use of according to the fourth embodiment of the present invention;
Fig. 14 is a flow chart for illustrating decryption processing of data in which a specific number specifying the information storage apparatus is made use of according to the fourth embodiment of the present invention;
Figs. 15A and 15B are views for illustrating, by way of example, a file structure when access control is performed by holding a plurality of specific information of individual files in the system according to a fifth embodiment of the present invention;
Fig. 16 is a flow chart for illustrating a processing procedure for creating a file when access control is performed by holding a plurality of specific information for individual files in the file structure shown in Fig. 15;
Fig. 17 is a flow chart for illustrating a processing procedure for a data read/write operation when access control is performed by holding a plurality of specific information for individual files in the file structure shown in Fig. 15;
Figs. 18A and 18B are views showing another example of a file structure adopted in the access control performed by holding a plurality of specific information of individual files according to a sixth embodiment of the present invention;
Fig. 19 is a flow chart for illustrating a processing procedure for creating a file in the case where access control is performed by holding a plurality of specific information for the individual files in the file structure shown in Fig. 18;
Fig. 20 is a flow chart for illustrating a processing procedure for data read operation when access control is performed by holding a plurality of specific information for the individual files in the file structure shown in Fig. 18;
Fig. 21 is a flow chart for illustrating a processing procedure for data write operation when access control is performed by holding a plurality of specific information of the individual files in the file structure shown in Fig. 18;

Fig. 22 is a block diagram showing generally and schematically a system configuration of a personal computer system serving as an information processing system and having a storing medium inherent number which specifies the information storage apparatus according to a seventh embodiment of the present invention;

Figs. 23A and 23B are views showing, by way of example, a file structure adopted in the access control performed by using the storing medium inherent number in the personal computer system shown in Fig. 22;

Fig. 24 is a flow chart for illustrating a processing procedure for creating a file when access control is performed by using the storing medium inherent number in the file structure shown in Fig. 23;

Fig. 25 is a flow chart for illustrating a processing procedure for data read operation when access control is performed by using the storing medium inherent number in the file structure shown in Fig. 23;

Fig. 26 is a flow chart for illustrating a processing procedure for data write operation when access control is performed by using the storing medium inherent number in the file structure shown in Fig. 23; and

Fig. 27 is a block diagram showing generally and schematically a configuration of a personal computer system which can ensure enhanced reliability of data according to an eighth embodiment of the present invention.

DESCRIPTION OF THE PREFERRED EMBODIMENTS

The present invention will be described in detail in conjunction with what is presently considered as preferred or typical embodiments thereof by reference to the drawings. Incidentally, in the description which follows, like reference characters designate like or corresponding parts throughout the several views.

In general, in the information storage apparatus used in combination with the information processing system according to the present invention, an arithmetic processing unit is additionally incorporated to serve as a specific number generating module. Upon issuance of a request for delivery of information, a predetermined arithmetic processing is executed by the arithmetic processing unit by using relevant parameters to thereby generate a group identifier which is common to a group of the information storage apparatuses of the individual information processing systems as classified on the basis of media identifiers of the information storage apparatuses. In other words, the group identifier is not set to a fixed or constant value but set to a value determined on the basis of the media information identifying discriminatively or specifying the information storing media (i.e., information concerning the information storage apparatus) and specific information specifying the contents or identity of the group. The medium information is stored in a predetermined storage medium when the information storage apparatus is manufactured. On the other hand, upon operation of the information processing system(s), access control to the data or encryption thereof is performed by using as the key the group identifier generated or created dynamically, so to say. In this manner, the secrecy of the information stored in the information storage or storages which are used within a group can positively be protected on a group-by-group basis. By the way, the group identifier described above will also be termed the specific number in the following description.

Embodiment 1

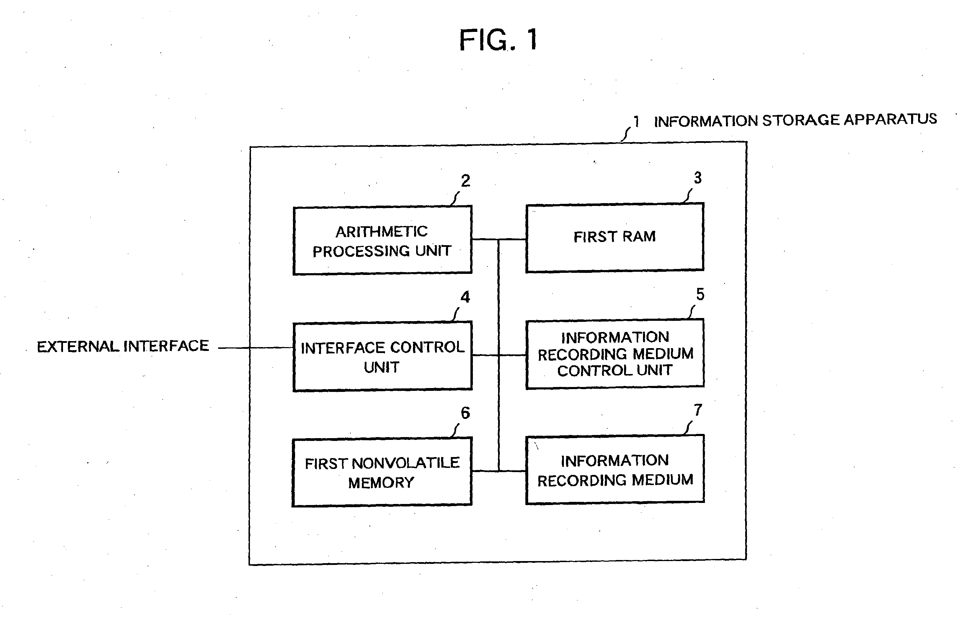

Figure 1 is a schematic block diagram showing generally a configuration of the information storage apparatus (also referred to simply as the information storage) according to an embodiment of the present invention. The information storage apparatus designated generally by reference numeral 1 is comprised of an arithmetic processing unit 2 designed for performing parameter arithmetic operations on the basis of specific information and intra-storage information (i.e., information stored or held by the information storage apparatus) to thereby generate the specific number for specifying or identifying the information storage apparatus, a first RAM (Random Access Memory) 3 constituted by a high-speed mass memory such a DRAM (Dynamic Random Access Memory), an SRAM (Static Random Access Memory) or the like, an interface control unit 4 designed for performing interface control in cooperation with an external interface of a host function module or the like which constitutes a major part of the information processing system described hereinbefore, an information recording medium control unit 5 which is designed for performing control of an information recording medium such as a hard disk or the like, a first nonvolatile memory 6 for holding data upon occurrence of power-off event or the like, and an information recording medium 7 such as a hard disk on which the device information specifying or identifying the information storage apparatus is written.

The arithmetic processing unit 2 is designed to generate the specific number for specifying or discriminatively identifying the information storage apparatus by performing parameter arithmetic operation on the basis of the specific information and the intra-storage information (storing medium information) held by the information storage apparatus itself. In that case, as the specific information, there may be used the group information assigned to systems of a group classified hierarchically, file information such as file names reserved in the information storage apparatus, definition information defined arbitrarily by the user of the information processing system. At this juncture, it should also be mentioned that the specific number may be added with unauthorized alteration preventing information for detecting the unauthorized or illegal alteration such as falsification of the specific number. Further, it should be added that the specific number as generated or created may be used as the key for encryption or decryption of data upon sending or reception thereof.

Further, as the specific information such as the group information mentioned above, there may be held a plurality of specific information in one file. In that case, the specific numbers generated through parameter arithmetic operation on the basis of a plurality of the specific information and the intra-storage information may be used in the file access control for making access to a file or for carrying out the file access control in combination with the media numbers identifying discriminatively the individual information recording media, respectively. It should further be mentioned that by employing a plurality of information storage apparatuses in one information processing system, reliability of the data can further be enhanced.

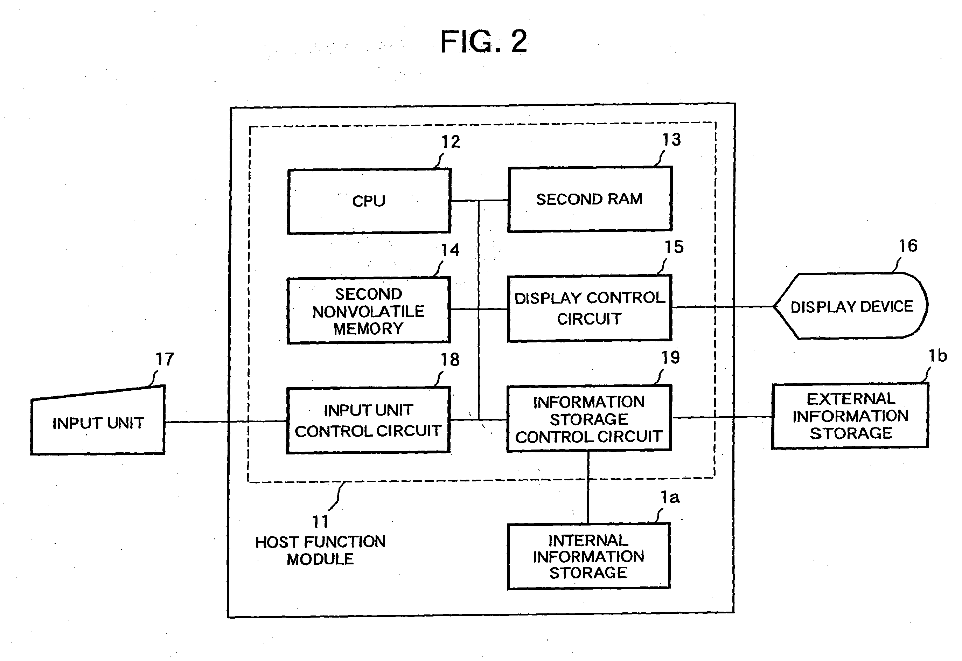

Next, description will be directed to an information processing system composed of a computer system in which the information storage apparatus (hereinafter also referred to simply as the information storage only for the convenience of description) described above by reference to Fig. 1. Figure 2 is a block diagram showing schematically and generally a configuration of the information processing system (hereinafter also referred to as the personal computer system) according to the first embodiment of the invention in which the information storage described above is employed. The information processing system realized in the form of a personal computer system is comprised of an input unit 17 such as a keyboard, mouse or the like, a host function module 11 which is in charge of controlling operations of the personal computer as a whole, an internal information storage 1a provided internally of the personal computer, an external information storage 1b provided externally of the personal computer and a display device 16 such as a CRT (Cathode Ray Tube), a liquid crystal display or the like. In this conjunction, it is to be noted that each of the internal information storage 1a and the external information storage 1b can be implemented in the same structure as the information storage apparatus 1 described previously by reference to Fig. 1. Incidentally, in the personal computer system now under consideration, two information storage apparatuses, i.e., the internal information storage 1a and the external information storage 1b, are employed. However, the invention is never restricted thereto. In other words, only one of these information storages may be used. Alternatively, more than two information storages may be employed with a view to ensuring enhanced reliability of the data.

The host function module 11 is comprised of a CPU (Central Processing Unit) 12 for executing arithmetic processings on various data in the personal computer, a second RAM (Random Access Memory) 13 for storing various data existing internally of the personal computer, a second nonvolatile memory 14 for holding the data available internally of the personal computer even upon occurrence of power-off or the like event, a display control circuit 15 for performing display control of the display device 16, an input unit control circuit 18 serving as an interface of the input unit 17 for controlling data inputted, and an information storage control circuit 19 serving as an interface of the internal information storage 1a and the external information storage 1b for controlling these information storages.

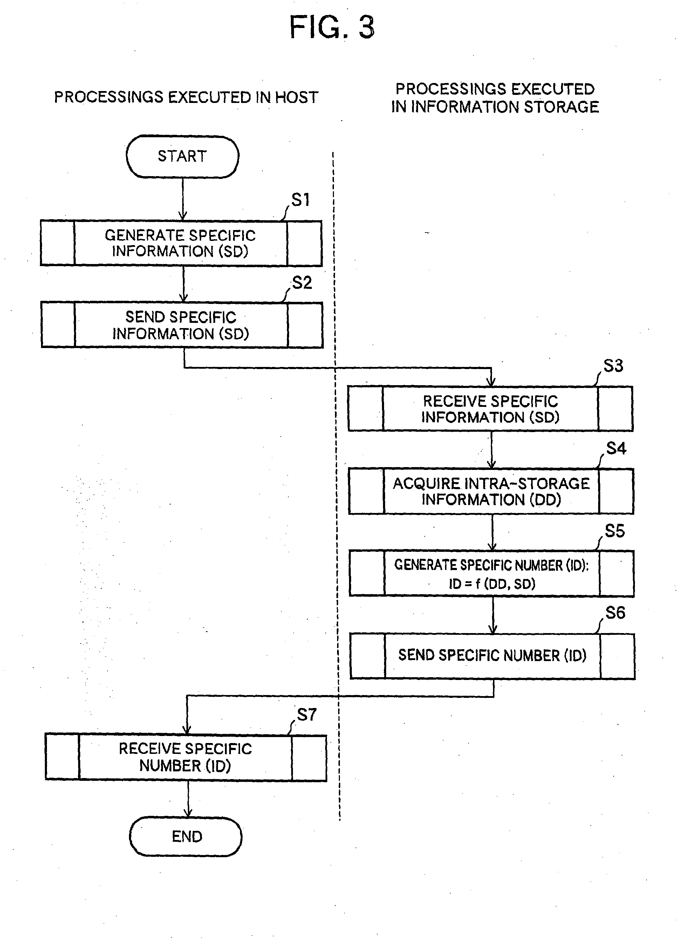

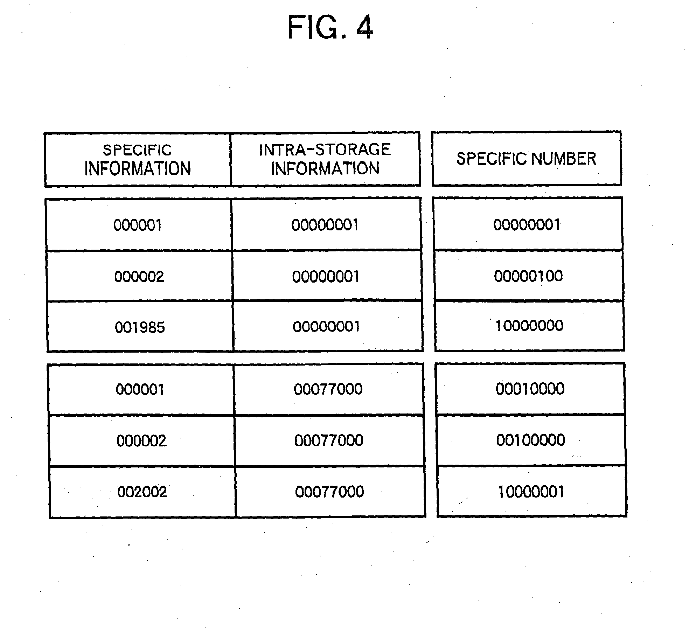

Figure 3 is a flow chart for illustrating a processing procedure for generating the specific number for specifying discriminatively or identifying the information storage in the personal computer system shown in Fig. 2. Further, Fig. 4 is a view showing several examples of the specific number generated through the processing procedure illustrated in Fig. 3. At first, the processing procedure illustrated in Fig. 3 will be described by referring to Fig. 2 which shows the configuration of the personal computer system. Referring to Fig. 3, a command for generating the specific information (SD) is inputted through the input unit 17 connected to the host function module 11. Then, a predetermined processing is executed by the CPU 12 of the host function module 11 through cooperation with the input unit control circuit 18, to thereby generate a desired specific information (SD) (step S1). In that case, the specific information (SD) generating status is displayed on the display device 16 under the control of the display device control circuit 15. Upon generation of the specific information (SD), it is sent to the internal information storage 1a or the external information storage 1b under the control of the information storage control circuit 19 incorporated in the host function module 11 (step S2).

It is presumed, by way of example, that the specific information (SD) has been transferred to the internal information storage 1a (step S3). Then, the internal information storage 1a acquires the intra-storage information (DD) registered in the internal information storage 1a itself (step S4). In succession, the arithmetic processing unit 2 (see Fig. 1) incorporated in the internal information storage 1a executes a predetermined arithmetic processing on the basis of the intra-storage information (DD) and the specific information (SD) to thereby generate the specific number which may also be referred to as the identification number or simply as the identifier (ID) for identifying or specifying discriminatively the internal information storage 1a itself (step S5). More specifically, the arithmetic processing unit 2 executes in the step S5 the arithmetic processing in accordance with the following expression:

$$ID = f (DD, SD)$$

where

ID represents the specific number,
DD represents the intra-storage information, and
SD represents the specific information.

Thus, the specific number (ID) can be determined. When the specific or identification number (ID) generated by the internal information storage 1a is sent out (step S6), the information storage control circuit 19 incorporated in the host function module 11 receives this specific number (ID) (step S7). Thus, the host function module 11 is capable of performing data read/write operation for the internal information storage 1a on the basis of the specific or identification number (ID) which specifies or identifies the internal information storage 1a. Incidentally, it should be mentioned that the specific number (ID) for the external information storage 1b can be generated through the essentially same processing procedure as that described above.

At this juncture, let's assume, by way of example, that the specific information and the intra-storage information (DD) illustrated in Fig. 4 are made use of. More concretely, when the information shown at the first row in Fig. 4 is made use of, the specific number "00000001" inherent to the information storage is generated on the basis of the specific information "000001" and the intra-storage information "00000001". Similarly, on the basis of the specific information "000002" and the intra-storage information "00000001", the specific number "00000100" inherent to the information storage is generated. In a similar manner, other specific numbers inherent to the information storages shown in Fig. 4 are generated or created on the basis of the relevant specific information and the respective intra-storage information.

Embodiment 2

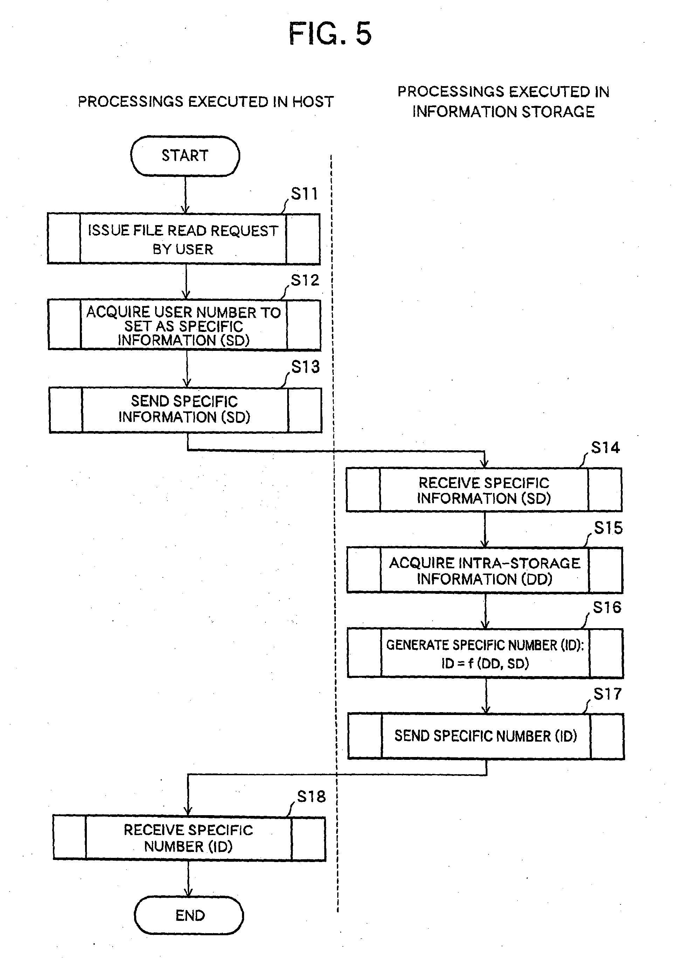

A second embodiment of the present invention is directed to generation or creation of the specific number by using group information as the specific information. Figure 5 is a flow chart for illustrating a processing procedure for generating the specific number by making use of the group information as the specific information according to the second embodiment of the invention. The processing procedure according to the instant embodiment differs from that shown in Fig. 3 mainly in the respect that the specific information is replaced by the group information. Incidentally, it is presumed that the information storage and the information processing system are essentially same as those described hereinbefore in conjunction with the first embodiment of the invention. When the group information held by the systems of a group classified hierarchically is used, the user issues a file read request (step S11) to acquire the user ID number which is then set as the specific information (SD) (step S12). The specific information (SD) is sent out from the host (step S13) is received by the information storage (step S14). In addition, the information storage acquires the intra-storage information (DD) stored in the very information storage (step S15).

In succession, the arithmetic processing unit 2 incorporated in the above-mentioned information storage executes a predetermined arithmetic processing on the basis of the intra-storage information (DD) and the specific information (SD) to thereby generate the specific number (ID) for identifying or specifying the information storage mentioned just above. More specifically, the arithmetic processing unit 2 executes the arithmetic processing in accordance with the following expression:

$$\text{specific number (ID)} = f \text{ (intra-storage information, specific}$$

$$\text{information)}$$

Thus, the specific number (ID) can be determined (step S16). When the specific or identification number (ID) generated by the information storage is sent out (step S17), the host receives this specific number (ID) (step S18). In this way, the host is capable of performing data read/write operation for the information storage on the basis of the specific number (ID) specifying or identifying that information storage.

Embodiment 3

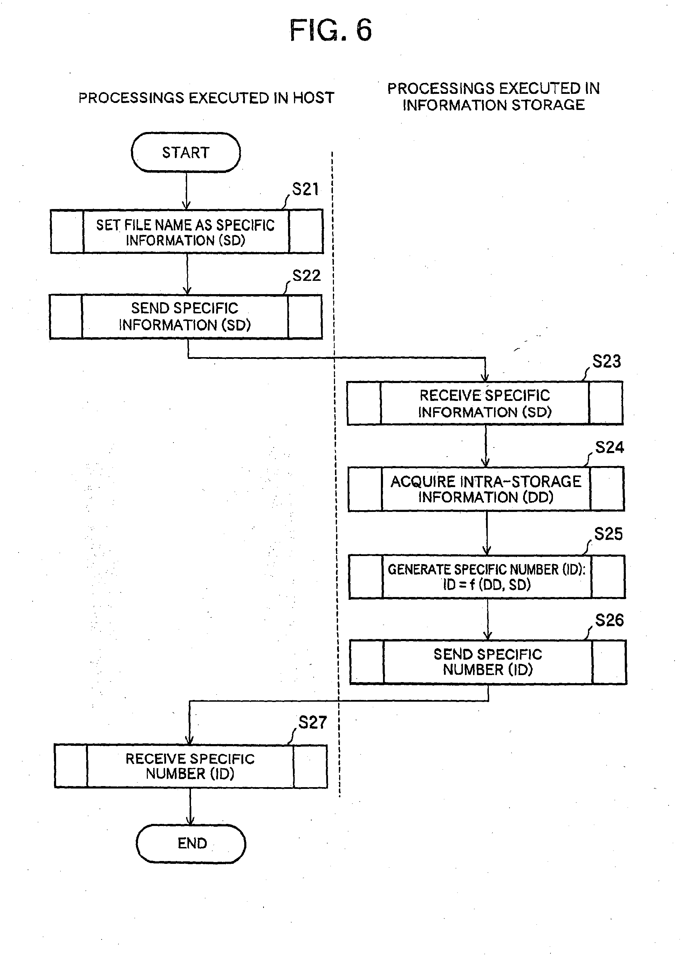

A third embodiment of the invention concerns generation of the specific number by using file information as the specific information. Figure 6 is a flow chart for illustrating a processing procedure for generating the specific number by making use of the file information as the specific information according to a third embodiment of the present invention. At first, the name of a file to be used is set as the specific information (SD) (step S21). The specific information (SD) is sent from the host (step S22) to be received by the information storage (step S23). In addition, the information storage acquires the intra-storage information (DD) stored in the information storage itself (step S24).

In succession, the arithmetic processing unit 2 incorporated in the above-mentioned information storage executes a predetermined arithmetic processing on the basis of the intra-storage information (DD) and the specific information (SD) to thereby generate the specific number (ID) for identifying or specifying discriminatively the information storage mentioned just above. More specifically, the arithmetic processing unit 2 executes the arithmetic processing in accordance with the following expression:

$$\text{specific number (ID)} = f (\text{intra-storage information, specific}$$

$$\text{information)}$$

Thus, the specific number (ID) can be determined (step S25). The specific identification number (ID) generated by the information storage is delivered (step S26), and the host receives this specific number (ID) (step S27). In this way, the host is capable of performing data read/write operation on the basis of the specific number (ID) specifying the information storage.

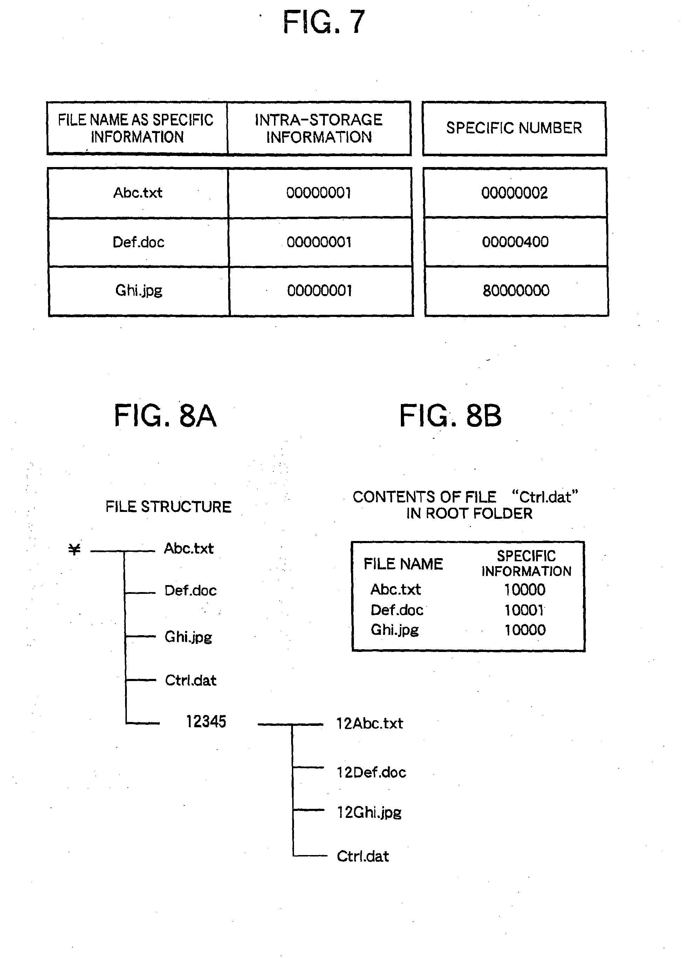

Figure 7 is a view showing, by way of example only, the specific numbers generated or created by making use of the file information (i.e., the file names) as the specific information. For example, the specific number "00000002" inherent to the information storage is generated on the basis of the file name "Abc.txt" used as the specific information and the intra-storage information "00000001". Similarly, on the basis of the file name "Def.doc" used as the specific information and the intra-storage information "00000001", the specific number "00000400" inherent to the information storage is generated. In a similar manner, other specific numbers inherent to the information storages are generated or created on the basis of the respective file names and the intra-storage information, as shown in Fig. 7.

Figures 8A and 8B are views for illustrating, by way of example, a file structure in the case where the specific information (i.e., the file names) of the individual files is held by another file. As can be seen in the figures, in the case where the group identifier (ID) is to be generated on a file-by-file basis, the files stored in such a structure as illustrated in Fig. 8A are replaced by the specific information corresponding to the file names, as represented by the contents of the file "Ctrl.dat" located in the root folder (Fig. 8B). By way of example, the file name "Abc.txt" is replaced by the specific information "10000", the file name "Def.Doc" is replaced by the specific information "10001", and the file name "Ghi.jpg" is replaced by the specific information "10000". In this manner, the specific information of the individual files can be held in a different or separate file.

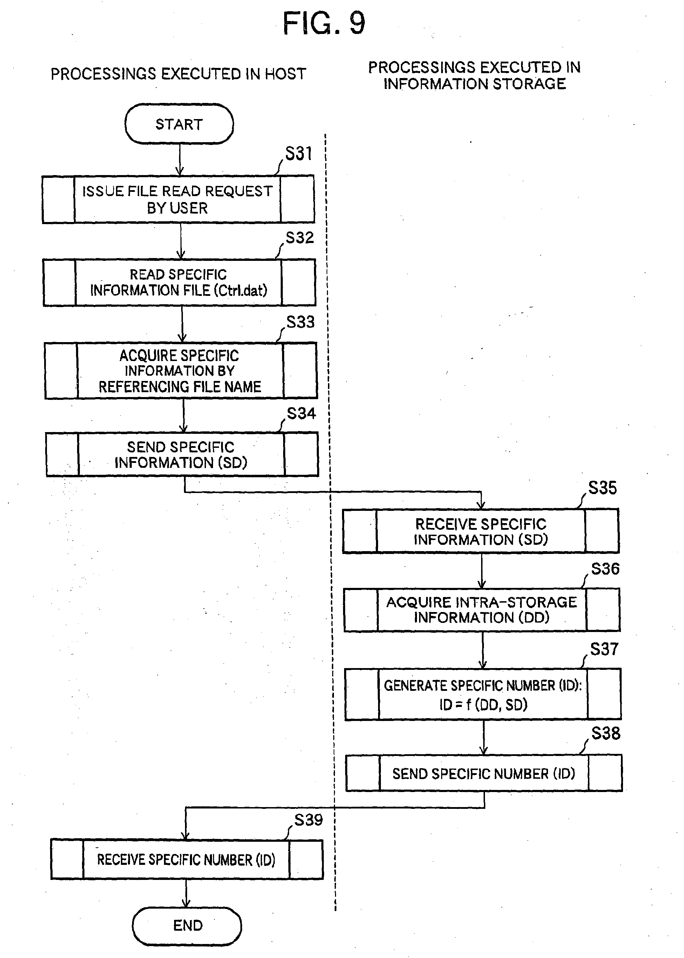

Figure 9 is a flow chart for illustrating a processing procedure for generating the specific number by making use of the specific information reserved in the separate file as shown in Fig. 8B. Referring to Fig. 9, the user firstly issues a file read request (step S31), whereon operation for reading the specific information file "Ctrl.dat" such as shown in Fig. 8B is performed (step S32) to thereby fetch or acquire the ID number of the specific information corresponding to the file name such as the one contained in the table shown in Fig. 8B (step S33). When the host sends out the acquired specific information (SD) (step S34), the information storage receives that specific information (SD) (step S35). Moreover, the information storage acquires the intra-storage information (DD) registered in that information storage itself (step S36).

In succession, the arithmetic processing unit 2 incorporated in the above-mentioned information storage executes a predetermined arithmetic processing on the basis of the intra-storage information (DD) and the specific information (SD) to thereby generate the identification or specific number (ID) for identifying or specifying the information storage itself. More specifically, the arithmetic processing unit 2 executes the arithmetic processing in accordance with the following expression (step S37):

$$\text{specific number (ID)} = f (\text{intra-storage information, specific}$$

$$\text{information)}$$

The specific number (ID) generated is sent out from the information storage (step S38), and the host receives this specific number (ID) (step S39). Thus, the host is capable of performing data read/write operation on the basis of the specific number (ID) specifying or identifying the information storage. In this manner, the access to the above-mentioned file stored in the information storage from the other system for which the above-mentioned specific number is not available is subjected to limitation.

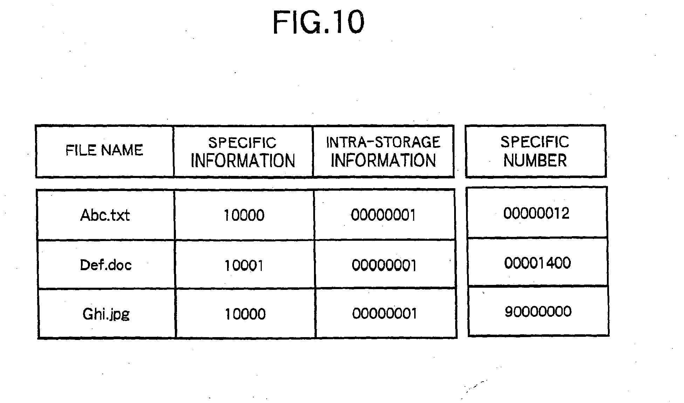

Figure 10 is a view showing, by way of example only, the specific numbers generated or created by making use of the specific information reserved in the separate file. For example, the file name "Abc.txt" is firstly transformed into the specific information "10000", whereon the specific number "00000012" is generated on the basis of the specific information "10000" and the intra-storage information "00000001". Similarly, the file name "Def.doc" is transformed into the specific information "10001", whereon the specific number "00001400" is generated on the basis of the specific information "10001" and the intra-storage information "00000001". In a similar manner, the other file names are transformed into the specific information and then the specific numbers inherent to the information storages are generated or created on the basis of the specific information and the intra-storage information, as can be seen in Fig. 10.

Embodiment 4

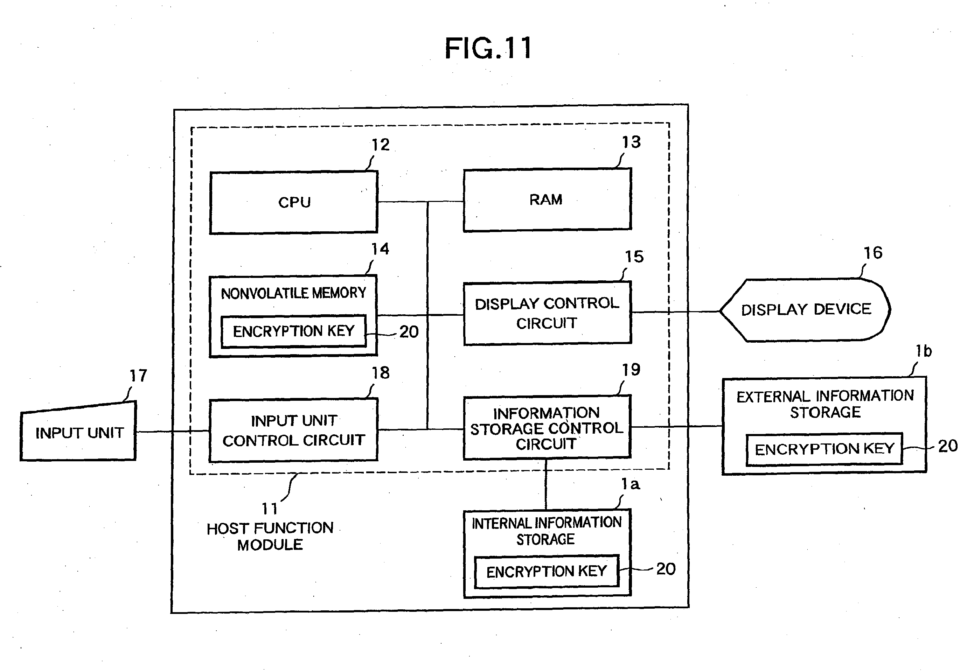

Figure 11 is a block diagram showing a personal computer system which is imparted with an unauthorized alteration preventing function for detecting the unauthorized alteration or modification such as falsification according to a fourth embodiment of the present invention. The personal computer system according to the instant embodiment differs from the system shown in Fig. 2 in the respect that one and the same encryption key 20 is imparted to the second nonvolatile memory 14, the internal information storage 1a and the external information storage 1b, respectively. Accordingly, repetition of what has been described by reference to Fig. 2 will be unnecessary. The encryption key 20 is not only imparted to the second nonvolatile memory 14 of the host function module 11 so that the encryption key can be reserved even when the power supply is interrupted or turned off but also imparted to the arithmetic processing unit of the internal information storage 1a and that of the external information storage 1b to be used for generation of a random number as well as for encryption/decryption of the data.

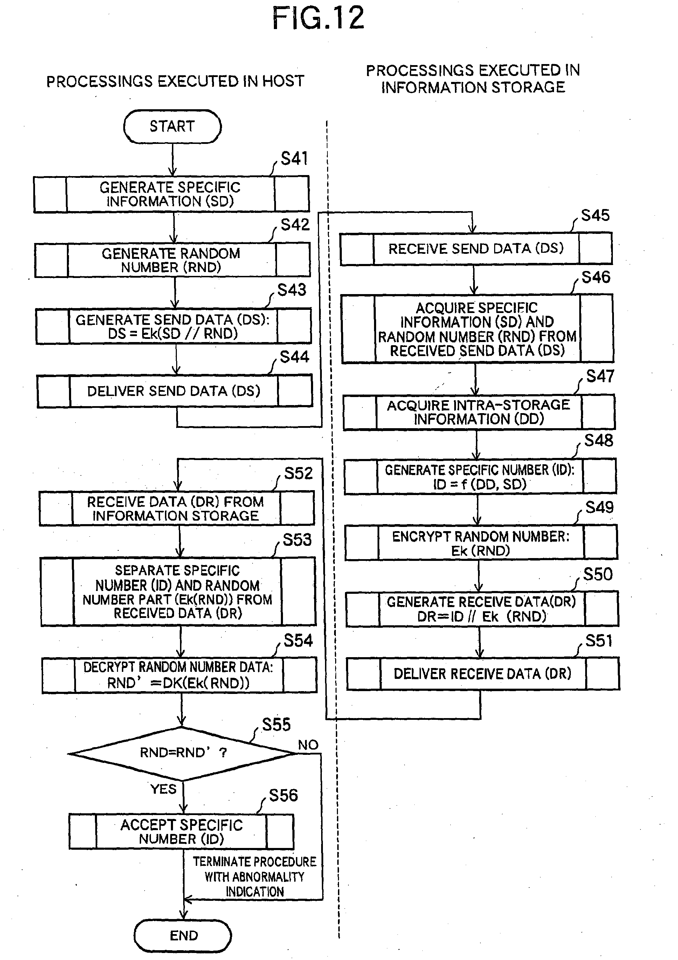

Figure 12 is a flow chart for illustrating a processing procedure for adding the unauthorized alteration/ modification preventing information to the specific number for the purpose of detecting the unauthorized alteration such as falsification in the personal computer system shown in Fig. 11. In response to the input operation performed by the user through the input unit 17, the specific information (SD) is generated through cooperation of the input unit control circuit 18 and the CPU 12 of the host function module 11 (step S41). Further, a random number (RND) is generated by using the encryption key 20 on the basis of the specific information (SD) (step S42). Incidentally, the specific information (SD) may be the one read out from those already registered. Send data (DS) is then generated from the specific information (SD) and the random number (RND). In other words, the send data (DS) is generated in accordance with the undermentioned expression (step S43).

$$DS = Ek (SD // RND)$$

The send data (DS) generated is then sent from the host to the information storage (step S44).

The information storage receives the send data (DS) (step S45) to acquire the specific information (SD) and random number (RND) from the send data as received (step S46). Furthermore, the information storage acquires the intra-storage information (DD) registered in the information storage itself (step S47). In succession, the arithmetic processing unit 2 incorporated in the information storage executes a predetermined arithmetic processing on the basis of the intra-storage information (DD) and the specific information (SD) to thereby generate the identification or specific number (ID) for identifying or specifying definitely the information storage itself. More specifically, the arithmetic processing unit 2 executes the arithmetic processing in accordance with the following expression (step S48):

$$\text{specific number (ID)} = f \text{ (intra-storage information, specific}$$

$$\text{information)}$$

Subsequently, encryption of the random number Ek (RND) is performed by the arithmetic processing unit incorporated in the information storage (step S49). Further, the receive data (DR) is generated in accordance with the undermentioned expression (step S50).

$$\text{receive data (DR)} = ID \text{ (specific number) // Ek ((RND) random}$$

$$\text{number)}$$

The receive data (DR) as generated is sent to the host from the information storage (step S51).

On the host side, the host function module 11 receives the data (DR) (step S52) sent from the information storage to thereby separate the specific number (ID) and the random number part (Ek (RND)) from the received data (DR) (step S53). In succession, the CPU 12 incorporated in the host function module 11 performs decryption of the random number data in accordance with the undermentioned expression (step S54):

$$RND' = Dk (Ek (RND))$$

Further, the CPU 12 compares the random number (RND) generated upon sending operation with the random number (RND') separated from the received data (DR) (step S55). When the random number (RND) generated upon sending operation coincides with the random number (RND') separated from the received data (i.e., when the decision step S55 results in affirmation "YES"), then the specific number (ID) is accepted (step S56). On the other hand, unless the random number (RND) generated upon sending operation coincides with the random number (RND') separated from the received data (i.e., when step S55 results in negation "NO"), an alarm or the like is generated, and the processing procedure is terminated, indicating abnormality.

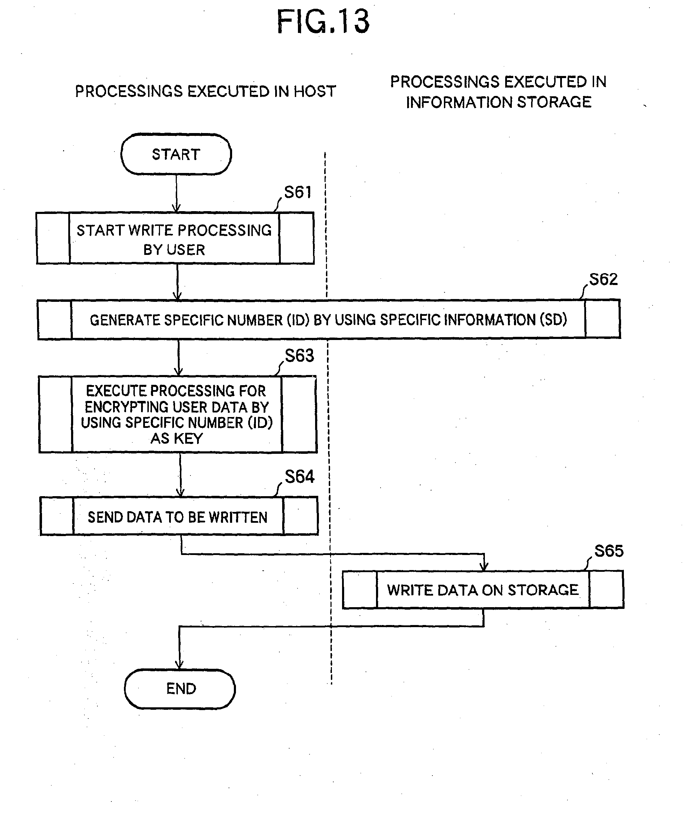

Figure 13 is a flow chart showing a flow of encryption processing of data in which the specific number specifying or identifying discriminatively the information storage is made use of. Referring to Fig. 13, when the user starts data write processing (step S61), the specific number (ID) which may also be termed the identification number is generated by making use of the specific information (SD) on the information storage side by resorting to the method or procedure described previously (step S62). Subsequently, on the host side, encryption processing of the user data is executed by using the specific number (ID) as the key (step S63), whereby the written data is encrypted to be subsequently sent to the information storage (step S64). In response, the information storage executes the write processing of the encrypted data (step S65).

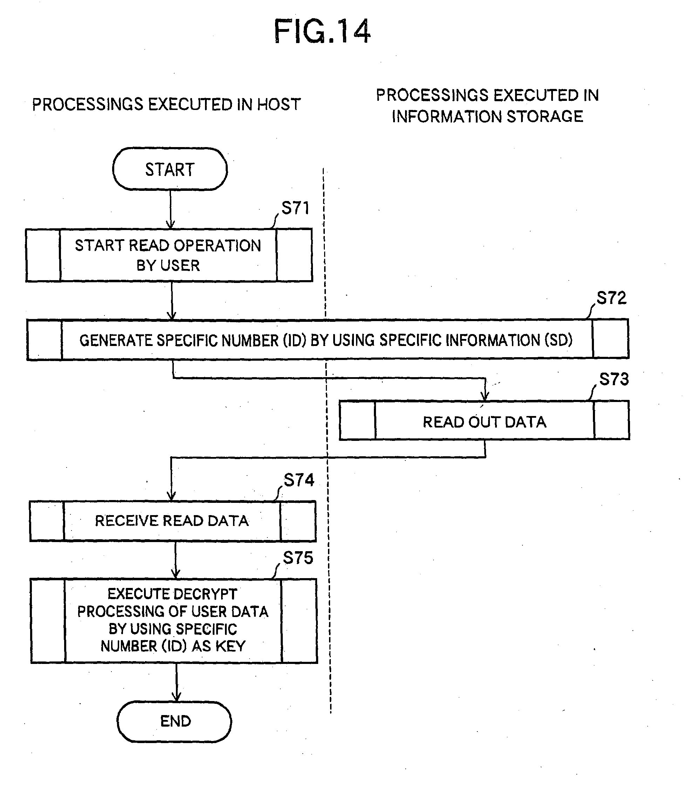

Figure 14 is a flow chart showing a flow of decryption processing of data in which the specific number specifying or identifying definitely the information storage is made use of. Referring to Fig. 14, when the user starts data read processing (step S71), the specific number (ID) is generated on the information storage side by making use of the specific information (SD) in accordance with the procedure described previously (step S72). In succession, read processing of data is executed on the information storage side, whereon the data read out is sent to the host (step 573). In response, the host receives the data read out and sent from the storage (step S74) to execute decryption processing of the user data by using the specific number (ID) as the key.

Embodiment 5

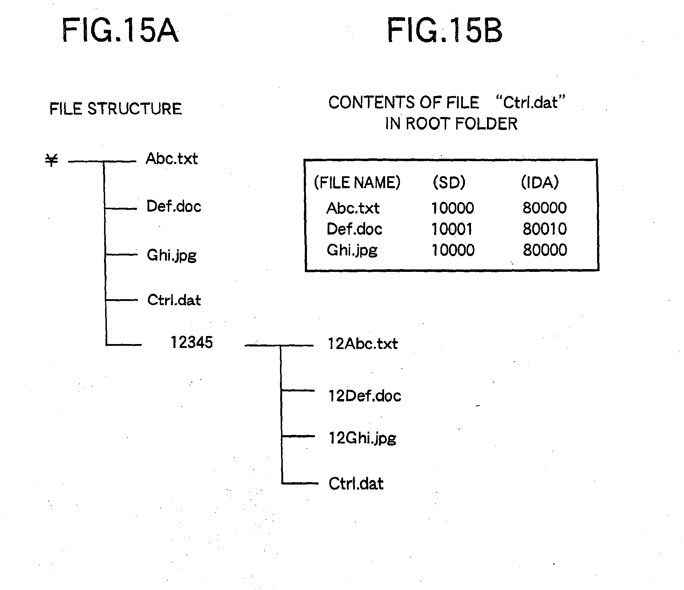

A fifth embodiment of the present invention is directed to the access control performed by holding a plurality of specific information of file. Figures 15A and 15B are views for illustrating, by way of example, a file structure in the case where access control is performed by holding a plurality of specific information of individual files according to the fifth embodiment of the invention. When the access control is performed by holding a plurality of specific information of the individual files and when the file structure is, for example, such as illustrated in Fig. 15A, the file names are firstly replaced by the corresponding specific information (SD) and then the specific numbers (IDA) are determined, as can be seen in Fig. 15B in which ,the contents of the file named "Ctrl.dat" and located in the root folder is shown. By way of example, when the file name "Abc.txt" is replaced by the specific information (SD) "10000", there can be determined the specific number (IDA) "80000". Similarly, by replacing the file name "Def.Doc" by the specific information (SD) "10001", the specific number (IDA) "80010" is determined. Incidentally, it should be mentioned that the contents of the root folder are never restricted to those illustrated in Fig. 15B.

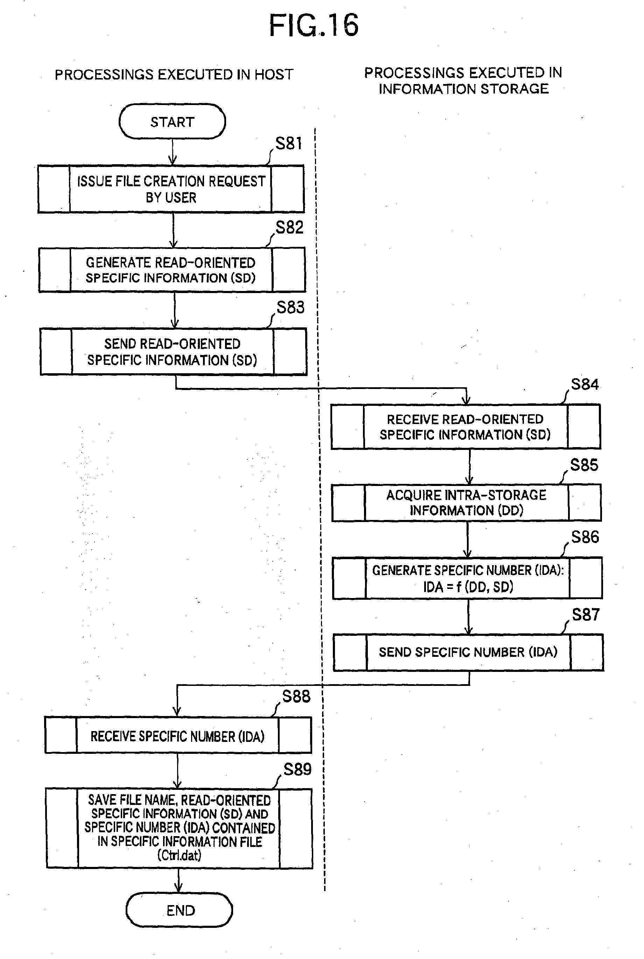

Figure 16 shows a flow chart for illustrating a processing procedure for creating a file in the case where the access control is performed by holding a plurality of specific information for the individual files in the file structure shown in Fig. 15. In the first place, on the host side, a file creation request is issued by the user (step S81). Then, the specific information (SD) for read operation is generated (step S82) to be sent to the information storage (step S83). Upon reception of the specific information (SD) for the read operation (step S84), the information storage additionally acquires the intra-storage information (DD) registered in the information storage itself (step S85).

In succession, the arithmetic processing unit 2 incorporated in the information storage executes a predetermined arithmetic processing on the basis of the intra-storage information (DD) and read-oriented specific information (i.e., specific information for read operation) (SD) to thereby generate the specific number (IDA) for identifying or specifying the information storage itself. More specifically, the arithmetic processing unit executes the arithmetic processing in accordance with the following expression:

$$specific\ number\ (IDA) = f\ (intra\text{-}storage\ information,\ specific$$

$$information)$$

Thus, the specific number (IDA) can be determined (step S86). When the specific number (IDA) generated by the information storage is sent out (step S87), the host receives this specific number (IDA) (step S88), whereon the file name, the read-oriented specific information (SD), and the specific number (IDA) are saved in the specific information reserving file "Ctrl.dat" shown in Fig. 15B on the basis of the specific number (IDA) (step S89).

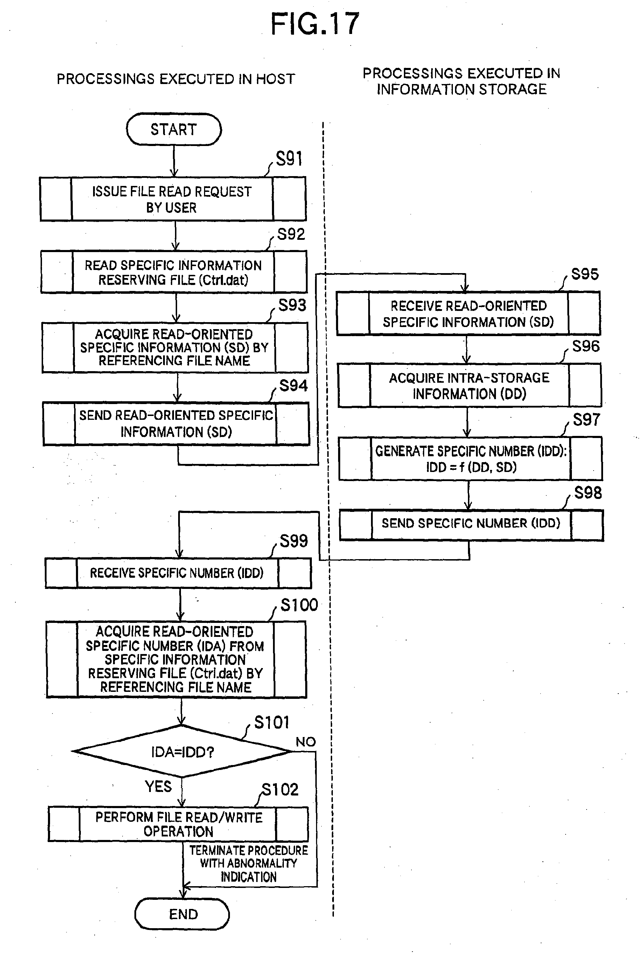

Figure 17 shows a flow chart for illustrating a processing procedure for data read/write operation in the case where the access control is performed by holding a plurality of specific information for individual files in the file structure described hereinbefore by reference to Fig. 15. In the first place, when a file read request is issued by the user on the host side (step S91), the specific information reserving file "Ctrl.dat" is read (step S92). As a result of this, the read-oriented specific information (SD) corresponding to the file name is acquired from the specific information reserving file "Ctrl.dat" (step S93) to be subsequently sent to the information storage (step S94). Upon reception of the read-oriented specific information (SD) (step S95), the information storage additionally acquires the intra-storage information (DD) registered in that information storage itself (step S96).

In succession, the arithmetic processing unit incorporated in the information storage executes a predetermined arithmetic processing on the basis of the intra-storage information (DD) and the read-oriented specific information (SD) to thereby generate the specific number (IDD) for identifying or specifying definitely the information storage itself. More specifically, the arithmetic processing unit executes the arithmetic processing in accordance with the following expression:

$$\text{specific number (IDD)} = f \text{ (intra-storage information, specific}$$

$$\text{information)}$$

Thus, the specific number (IDD) can be determined (step S97). When the specific number (IDD) generated by the information storage is sent out (step S98), the host receives this specific number (IDD) (step 899), to thereby acquire the read-oriented specific number (IDA) from the specific information reserving file "Ctrl.dat" with the aid of the file name (step S100).

Subsequently, decision is made as to whether or not the specific number (IDD) received is same as the specific number (IDA) saved in the specific information reserving file "Ctrl.dat" upon creation of the file (step S101). When coincidence is found (i.e., IDA = IDD with the step S101 resulting in "YES"), file read/write operation can be performed for the information storage (step S102). On the other hand, unless the coincidence is found with the decision step S101 resulting in "NO" (i.e., when IDA ≠ IDD), an alarm or the like is displayed, and the processing procedure is terminated, indicating occurrence of abnormality.

Embodiment 6

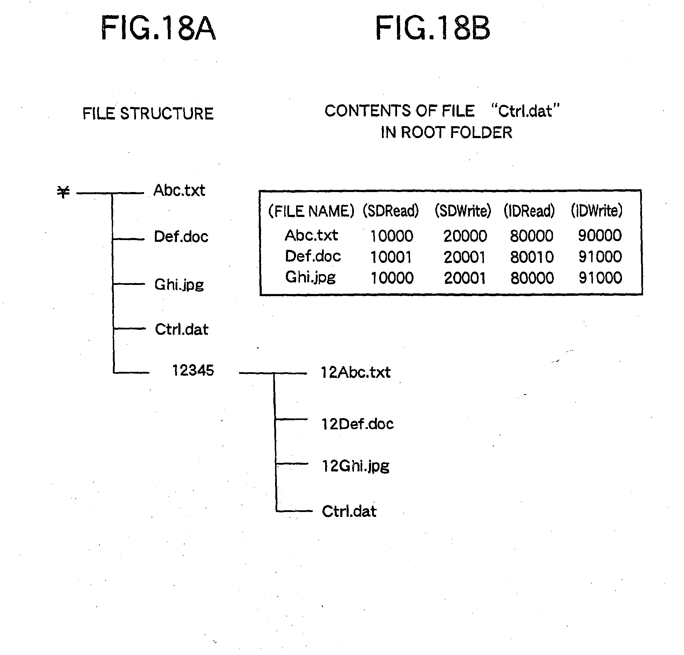

Figures 18A and 18B are views showing another example of file structure adopted in the access control performed by holding a plurality of specific information of individual files according to a sixth embodiment of the present invention. The file structure shown in Fig. 18B differs from that shown in Fig. 15B in the respect that the specific information (SD) corresponding to the file name are replaced by the read-oriented specific information (SDRead) and the write-oriented specific information (SDWrite), respectively, and that the specific number (ID) are substituted for by the read-oriented specific number (IDRead) and the write-oriented specific number (IDWrite), respectively, in the file "Ctrl.dat" located in the root folder as shown in Fig. 18B. By way of example, by replacing the file name "Abc.txt" by the read-oriented specific information (SDRead) "10000" and the write-oriented specific information (SDWrite) "20000", respectively, there can be determined the read-oriented specific number (IDA) "80000" and the write-oriented specific number (IDWrite) "90000".

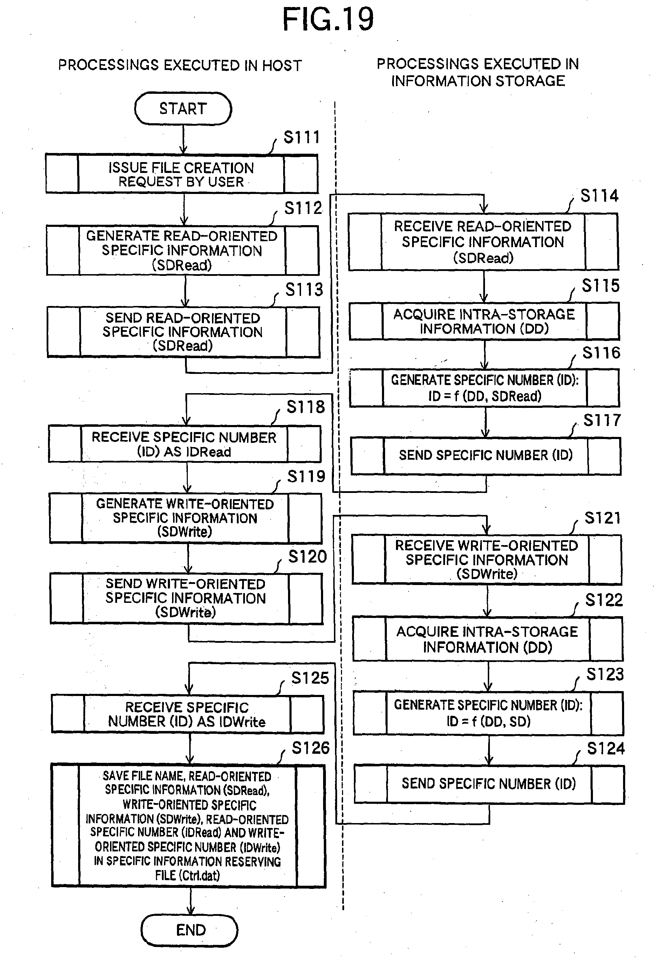

Figure 19 shows a flow chart for illustrating a processing procedure for creating a file on the presumption that the access control is performed by holding a plurality of specific information for the individual files in the file structure shown in Fig. 18. In the first place, on the host side, a file creation request is issued by the user (step S111), whereby the read-oriented specific information (i.e., specific information for read operation) (SDRead) is generated (step S112) to be sent to the information storage (step S113). Upon reception of the read-oriented specific information (SDRead) (step S114), the information storage additionally acquires the intra-storage information (DD) registered in the information storage itself (step S115).

In succession, the arithmetic processing unit 2 incorporated in the above-mentioned information storage executes a predetermined arithmetic processing on the basis of the intra-storage information (DD) and the read-oriented specific information (SDRead) to thereby generate the specific number (ID) for identifying or specifying definitely the information storage itself. More specifically, the arithmetic processing unit 2 executes the arithmetic processing in accordance with the following expression:

$$\text{specific number (ID)} = f \text{ (intra-storage information, specific}$$

$$\text{information)}$$

Thus, the specific number (ID) can be generated (step S116). When the specific number (ID) generated by the information storage is sent out (step S117), the host receives this specific number (ID) as the read-oriented specific number (IDRead) (step S118).

Subsequently, the write-oriented specific information (SDWrite) is generated (step S119) to be sent to the information storage (step S120). Upon reception of the write-oriented specific information (SDWrite) (step S121), the information storage acquires in addition the intra-storage information (DD) registered in the information storage itself (step S122). Subsequently, the arithmetic processing unit 2 incorporated in the above-mentioned information storage executes a predetermined arithmetic processing on the basis of the intra-storage information (DD) and the write-oriented specific information (SDWrite) to thereby generate the specific number (ID) which identifies or specifies definitely the information storage itself. More specifically, the arithmetic processing unit 2 executes the arithmetic processing in accordance with the following expression:

$$\text{specific number (ID)} = f \text{ (intra-storage information, specific}$$

$$\text{information)}$$

Thus, the specific number (ID) can be generated (step S123). When the specific number (ID) generated by the information storage is sent out (step S124), the host receives this specific number (ID) as the write-oriented specific number (IDWrite) (step S125). Then, the file name, the read-oriented specific information (SDRead), the write-oriented specific information (SDWrite), the read-oriented specific number (IDRead) and the write-oriented specific number (IDWrite) are saved in the specific information reserving file "Ctrl.dat" (step S126).

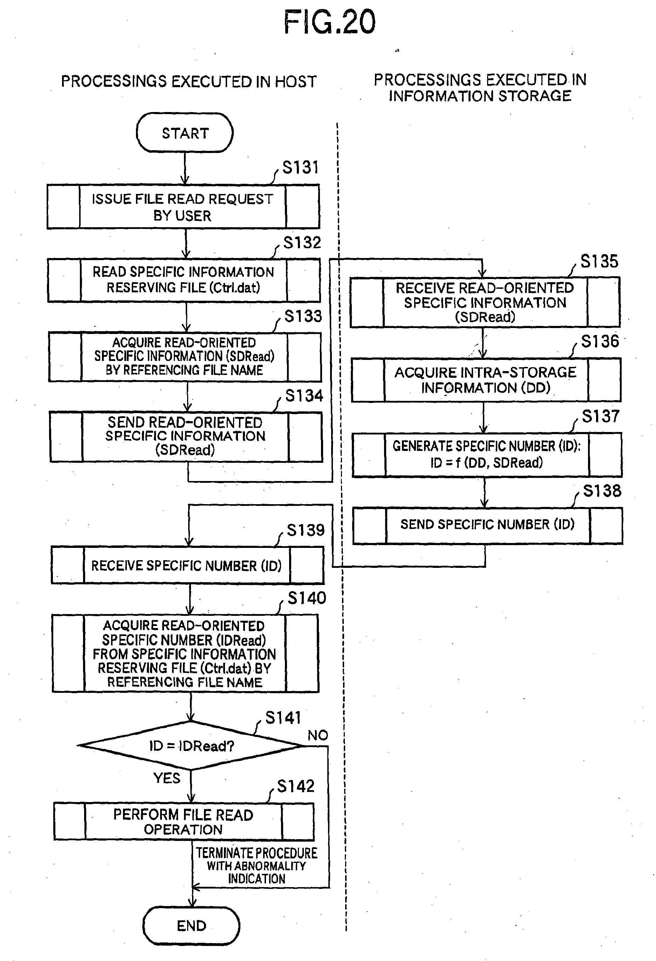

Figure 20 shows a flow chart for illustrating a processing procedure for data read operation in the case where the access control is performed by holding a plurality of specific information of the individual files in the file structure shown in Fig. 18B. At first, on the host side, a file read request is issued by the user (step S131). Then, operation for reading the specific information reserving file (Ctrl.dat) is performed (step S132). As a result of this, the read-oriented specific information (SDRead) corresponding to the file name is acquired from the specific information reserving file (Ctrl.dat) (step S133) to be subsequently sent to the information storage (step S134). Upon reception of the read-oriented specific information (SDRead) (step S135), the information storage acquires in addition the intra-storage information (DD) registered in the information storage itself (step S136).

In succession, the arithmetic processing unit 2 incorporated in the above-mentioned information storage executes a predetermined arithmetic processing on the basis of the intra-storage information (DD) and the read-oriented specific information (SDRead) to thereby generate the specific number (ID) for identifying or specifying definitely the information storage itself. More specifically, the arithmetic processing unit executes the arithmetic processing in accordance with the following expression:

$$\text{specific number (ID)} = f \text{ (intra-storage information, specific}$$

$$\text{information)}$$

Thus, the specific number (ID) can be generated (step S137). When the specific number (ID) generated by the information storage is sent out (step S138), the specific number (ID) is received by the host (step S139), and the read-oriented specific number (IDRead) which corresponds to the file name contained in the specific information preserving file (Ctrl.dat) is acquired (step S140).

Subsequently, decision is made as to whether or not the read-oriented specific number (IDRead) as acquired is same as the specific number (ID) for file creation which has been saved in the specific information reserving file (Ctrl.dat) when the file was created (step S141). When coincidence is found (i.e., ID = IDRead (with the step S141 resulting in "YES"), file read operation is performed (step S142). On the contrary, unless the coincidence is found with the decision step S141 resulting in "NO" (i.e., when ID ≠ IDRead), an alarm or the like is displayed, and the processing procedure is terminated, indicating occurrence of abnormality.

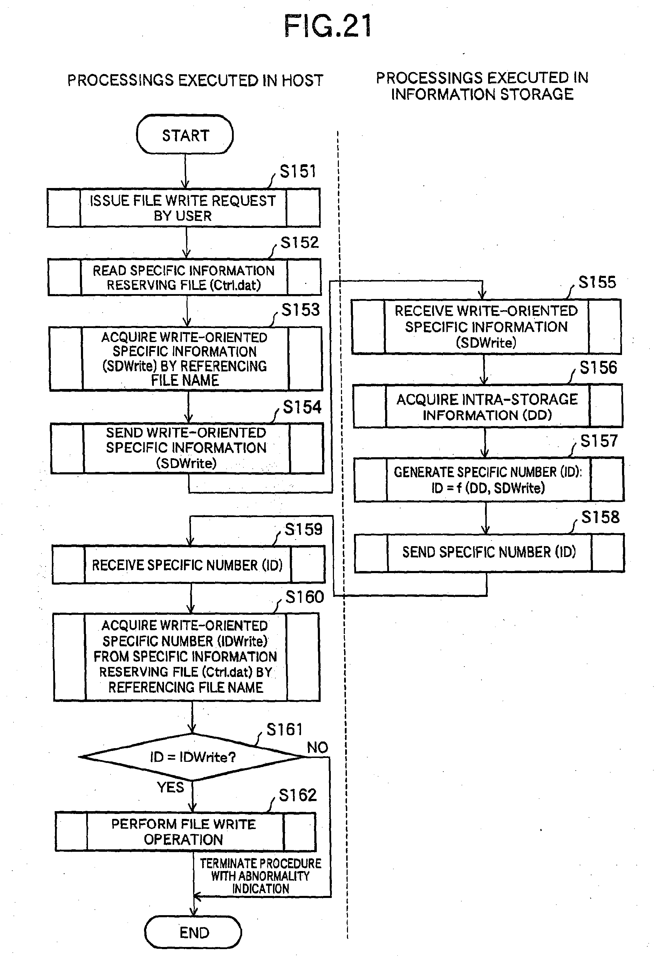

Figure 21 shows a flow chart for illustrating a processing procedure for data write operation in the case where the access control is performed by holding a plurality of specific information of the individual files in the file structure shown in Fig. 18B. At first, on the host side, a file write request is issued by the user (step S151). Then, operation for reading the specific information reserving file (Ctrl.dat) is performed (step S152). As a result of this, the write-oriented specific information (SDWrite) corresponding to the file name is acquired from the specific information reserving file (Ctrl.dat) (step S153) to be subsequently sent to the information storage (step S154). Upon reception of the write-oriented specific information (SDWrite) (step S155), the information storage acquires in addition the intra-storage information (DD) registered in the information storage itself (step S156).

In succession, the arithmetic processing unit 2 incorporated in the above-mentioned information storage executes a predetermined arithmetic processing on the basis of the intra-storage information (DD) and the write-oriented specific information (SDWrite) to thereby generate the specific number (ID) specifying definitely the information storage itself. More specifically, the arithmetic processing unit executes the arithmetic processing in accordance with the following expression:

$$\text{specific number (ID)} = f \text{ (intra-storage information, specific}$$

$$\text{information)}$$

Thus, the specific number (ID) can be generated (step S157). When the specific number (ID) generated by the information storage is sent out from the information storage (step S158), the specific number (ID) is received by the host (step S159), and the write-oriented specific number (IDWrite) which corresponds to the file name contained in the specific information preserving file (Ctrl.dat) is acquired (step S160).

Subsequently, decision is made as to whether or not the write-oriented specific number (IDWrite) acquired is same as the specific number (ID) for the file creation which has been saved in the specific information reserving file (Ctrl.dat) when the file was created (step 8161). When coincidence is found (i.e., ID = IDWrite with the step S161 resulting in "YES"), file write operation is performed on the information storage (step S162). On the other hand, unless the coincidence is found with the decision step S161 resulting in "NO" (i.e., when ID ≠ IDWrite), an alarm or the like is generated and the processing procedure is terminated, indicating occurrence of abnormality.

Embodiment 7

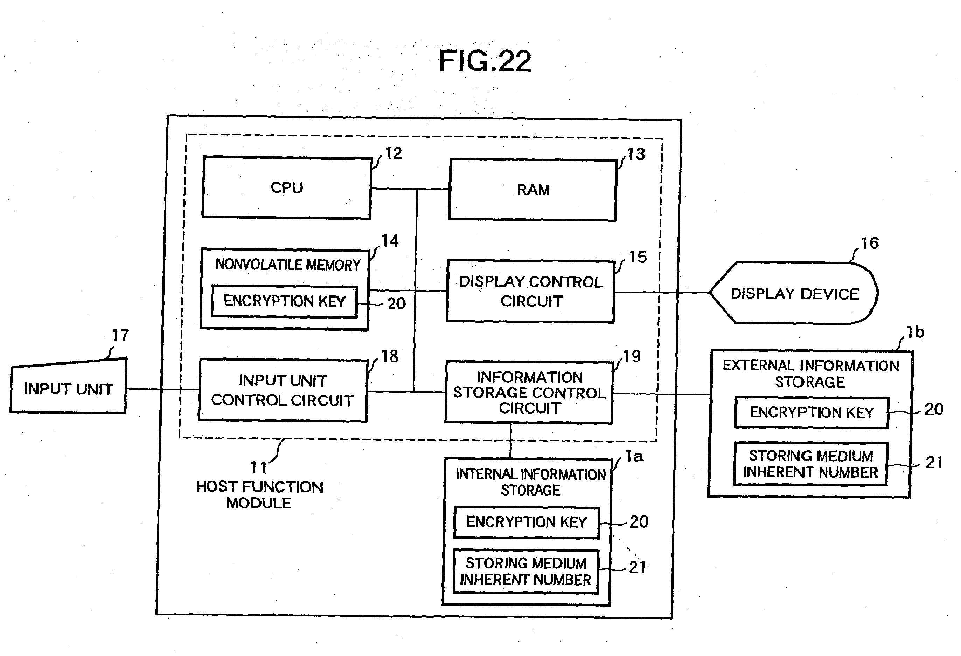

Figure 22 is a block diagram showing generally and schematically a system configuration of a personal computer system having a storing medium inherent number which specifies the information storage according to a seventh embodiment of the present invention. The structure of the personal computer system shown in Fig. 22 differs from that shown in Fig. 11 in the respect that the storing medium inherent number (medium information) 21 specifying the information storage is assigned to each of the internal information storage 1a and the external information storage 1b. In other words, in the security system (shown in Fig. 22) realized by the personal computer system, the storing medium inherent numbers 21 identifying discriminatively the individual information storages, respectively, are used in combination for the purpose of ensuring further enhanced security for the file access control.

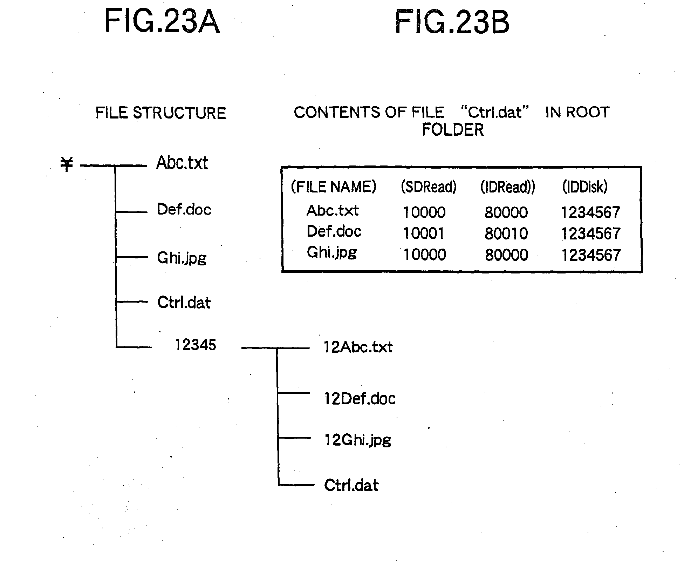

Figures 23A and 23B are views showing, by way of example, the file structure adopted in the access control performed by using the storing medium inherent number in the personal computer system shown in Fig. 22. As can be seen in the figures, a table is provided which contains the read-oriented specific information (SDRead), the read-oriented specific numbers (IDRead) and the storing medium inherent numbers (IDDisk) in correspondence to the file names, respectively. By way of example, as the contents of the file "Ctrl.dat" located in the root folder, the read-oriented specific information (SDRead) "10000", the read-oriented specific number (IDRead) "80000" and the storing medium inherent number (IDDisk) "1234567" are prepared in correspondence to the file name "Abc.txt". Similarly, the read-oriented specific information (SDRead) "10001", the read-oriented specific number (IDRead) "80010" and the storing medium inherent number (IDDisk) "1234567" are prepared in correspondence to the file name "Def.Doc".

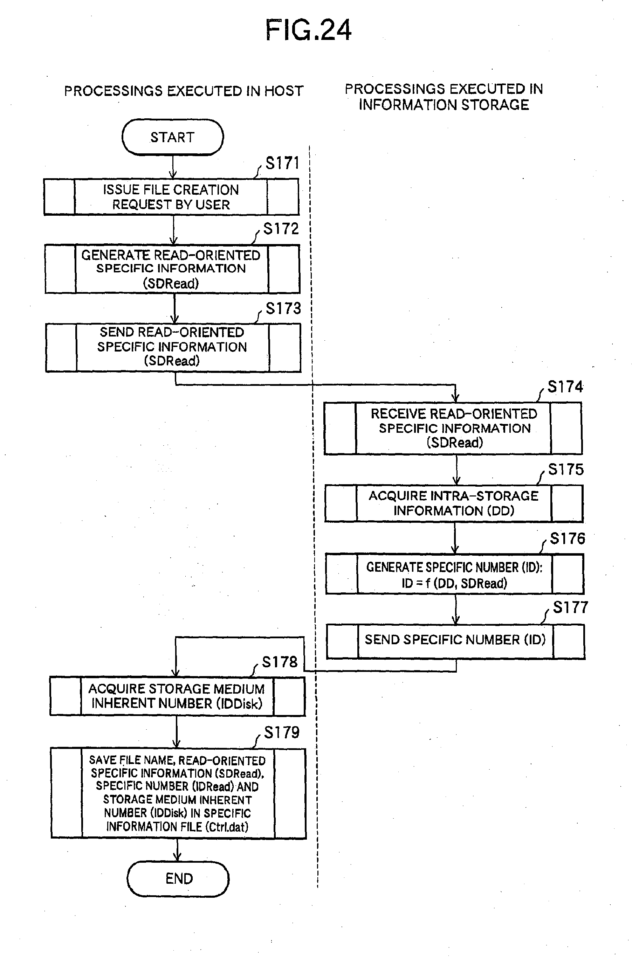

Figure 24 shows a flow chart for illustrating a processing procedure for creation of a file when the access control is performed by using the storing medium inherent number in the file structure shown in Fig. 23. In the first place, on the host side, a file creation request is issued by the user (step S171), whereby the read-oriented specific information (SDRead) is generated (step S172) to be sent to the information storage (step S173). Upon reception of the read-oriented specific information (SDRead) (step S174), the information storage acquires in addition the intra-storage information (DD) registered in that information storage itself (step S175).

In succession, the arithmetic processing unit 2 incorporated in the information storage executes a predetermined arithmetic processing on the basis of the intra-storage information (DD) and the read-oriented specific information (SDRead) to thereby generate the specific number (ID) for identifying or specifying definitely the information storage itself. More specifically, the arithmetic processing unit 2 executes the arithmetic processing in accordance with the following expression:

specific number (ID) = f (intra-storage information, read-oriented

specific information)

Thus, the specific number (ID) can be generated (step S176). When the specific number (ID) generated by the information storage is sent out (step S177), the host receives this specific number (ID) to thereby acquire the storing medium inherent number (IDDisk) (step S178). On the basis of the storing medium inherent number (IDDisk), the file name, the read-oriented specific information (SDRead), the read-oriented specific number (IDRead) and the storing medium inherent number (IDDisk) are saved in the specific information reserving file (Ctrl.dat), as can be seen in Fig. 23 (step S179).

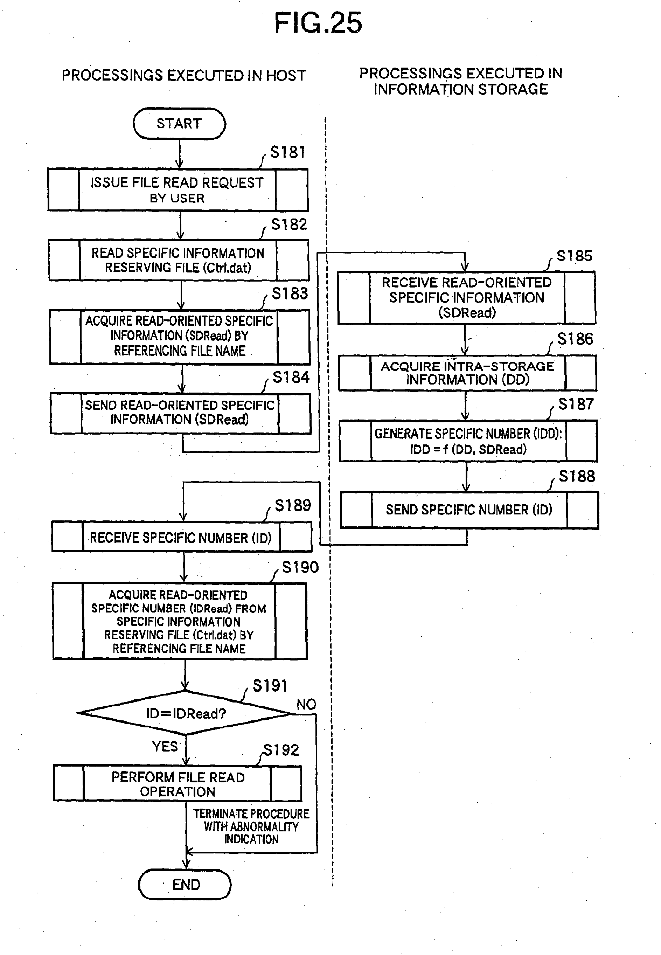

Figure 25 shows a flow chart illustrating a processing procedure for data read operation in the case where the access control is performed by using the storing medium inherent number in the file structure shown in Fig. 23. At first, on the host side, a file creation request is issued by the user (step S181). Then, operation for reading the specific information reserving file (Ctrl.dat) is performed (step S182). As a result of this, the read-oriented specific information (SDRead) corresponding to the file name is acquired from the specific information reserving file (Ctrl.dat) (step S183) to be subsequently sent to the information storage (step S184). Upon reception of the read-oriented specific information (SDRead) (step S185), the information storage acquires in addition the intra-storage information (DD) registered in the information storage itself (step S186).

In succession, the arithmetic processing unit 2 incorporated in the above-mentioned information storage executes a predetermined arithmetic processing on the basis of the intra-storage information (DD) and the read-oriented specific information (SDRead) to thereby generate the specific number (ID) for specifying definitely the information storage itself. More specifically, the arithmetic processing unit executes the arithmetic processing in accordance with the following expression:

specific number (ID) = f (intra-storage information, read-oriented

specific information)

Thus, the specific number (ID) can be generated (step S187). When the specific number (ID) generated by the information storage is sent out (step S188), the specific number (ID) is received by the host (step S189), and the read-oriented specific number (IDRead) which corresponds to the file name contained in the specific information preserving file (Ctrl.dat) is acquired (step S190).

Subsequently, decision is made as to whether or not the read-oriented specific number (IDRead) as acquired is same as the specific number (ID) which has been saved in the specific information reserving file (Ctrl.dat) when the file was created (step S191). When coincidence is found (i.e., when ID = IDRead with the step S191 resulting in "YES"), file read operation is performed (step S192). On the other hand, unless the coincidence is found with the decision step S191 resulting in "NO" (i.e., when ID ≠ IDRead), an alarm or the like is displayed, and the processing procedure is terminated, indicating occurrence of abnormality.

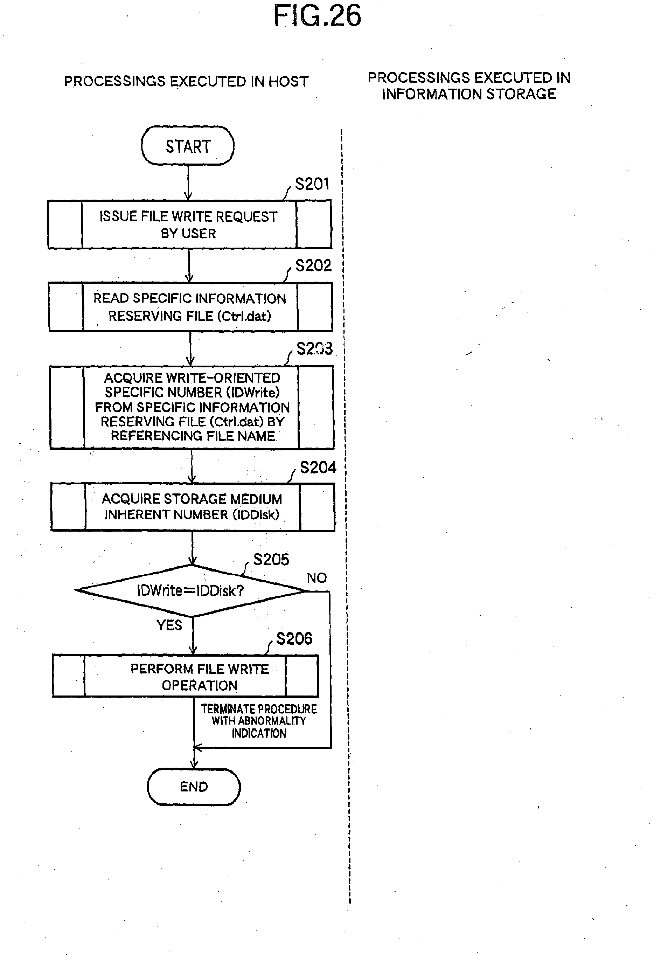

Figure 26 shows a flow chart for illustrating a processing procedure for data write operation when the access control is performed by using the storing medium inherent number in the file structure shown in Fig. 23. At first, on the host side, a file write request is issued by the user (step S201). Then, operation for reading the specific information reserving file (Ctrl.dat) is performed (step S202). As a result of this, the write-oriented specific information (IDWrite) corresponding to the file name is acquired from the specific information reserving file (Ctrl.dat) (step S203). Further, the storing medium inherent number (IDDisk) is acquired (step S204). In succession, decision is made as to whether or not the write-oriented specific number (IDWrite) acquired coincides with the storing medium inherent number (IDDisk) (step S205). When coincidence is found (i.e., when IDwrite = IDDisk with the step S205 resulting in "YES"), file write operation is performed (step S206). On the other hand, unless the coincidence is found with the decision step S205 resulting in "NO" (i.e., when IDWrite ≠ IDDisk), an alarm or the like is displayed and the processing procedure is terminated, indicating occurrence of abnormality.

Embodiment 8

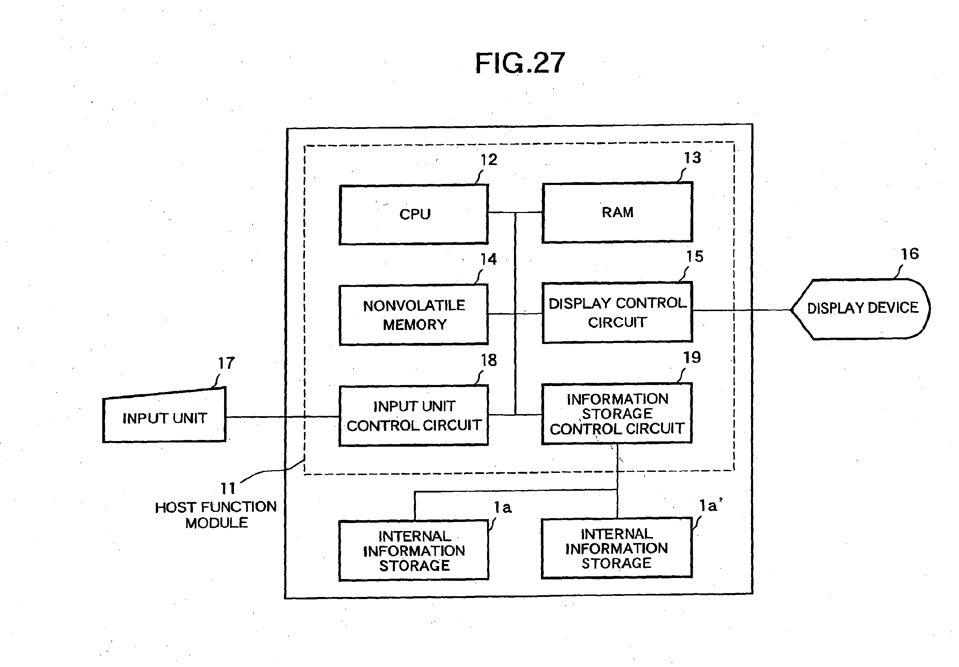

Figure 27 is a block diagram showing generally and schematically a configuration of a personal computer system which can ensure further enhanced reliability according to an eighth embodiment of the present invention. The personal computer system now under consideration differ from the personal computer system shown in Fig. 2 in that a pair of internal information storages 1a and 1a' are incorporated in the personal computer. In this personal computer system, each of the internal information storages 1a and 1a' is imparted with a same specific number (ID). Certainly, reliability of the personal computer system can be much enhanced as the number of the internal information storages increases beyond two. However, it is considered that two internal information storages are of optimal redundancy degree from the stand point of manipulability, expediency and economical efficiency.

The processing procedure described in the foregoing in conjunction with the various flow charts may be stored in a recording medium susceptible to reading by a computer. In that case, generation or creation of the specific number can be executed by the computer. In this conjunction, as the recording medium readable with the computer, there may be mentioned a portable type recording medium such as CD-ROM, flexible disk, DVD disk, optomagnetic disk, IC card or the like, a database storing a computer program therein or other computer and database thereof, transmission carrier on a transmission line and others.

In the foregoing, the present invention has been described in conjunction with several embodiments which are however shown only for the purpose of exemplification. It should be understood that the present invention is never restricted to the illustrated embodiments and thus various modifications and versions are possible without departing from the spirit and scope of the invention. By way of example, in the embodiments described above, groups are classified on the basis of the section or file name, and the group IDs are generated on a per group basis for data encryption/decryption to thereby allow the information to be laid open internally of the group while preventing leakage of the information to the exterior. However, the modes for grouping are not restricted to those described above. For example, personal computers interconnected by a LAN (Local Area Network), personal computers connected to major enterprises and customers and the like may be classified in the form of groups, respectively, for structurizing a security system which allows the information to be made available within the group while ensuring the security to the outsiders.

Effects of the Invention

As is apparent from the foregoing description, by using the information processing systems having the same intra-storage information in a sharing mode, the definite specific number (group identifier or group ID) can be created or generated with high degree of freedom on a per management unit basis e.g. in common to the whole company or for each group of organization such as department, division and section. By using the unique specific number (group identifier) in the data access control and data encryption, data access control internally and externally of the management unit can easily be carried out. More specifically, data can be laid open internally of a concerned management unit while protecting the data from leakage externally of the management unit. Furthermore, even if the number serving as the key for arithmetic processing or encryption should be leaked to a malicious third party, new specific number (group identifier) can easily be created by changing or modifying the arithmetic parameters, whereby the secrecy of information can perfectly be protected from the malicious third party.

Furthermore, since the mechanism for generating the specific number is independent of the access control for the hard disk drive, the files stored in the hard disk can freely be accessed. Accordingly, the contents of any file can be saved on the hard disk of different specific number for the back-up purpose.

Many features and advantages of the present invention are apparent from the detailed description and thus it is intended by the appended claims to cover all such features and advantages of the system which fall within the true spirit and scope of the invention. Further, since numerous modifications and combinations will readily occur to those skilled in the art, it is not intended to limit the invention to the exact constructions and operations illustrated and described. Accordingly, all suitable modifications and equivalents may be resorted to, falling within the spirit and scope of the invention.

**Claims**

1. An information storage apparatus designed for storing data used in an information processing system, comprising:

    intra-storage information storing member which stores information concerning said information storage apparatus; and
    specific number generating member which generates a predetermined specific number used for ensuring security of said data on the basis of the information concerning said information storage apparatus as stored in said intra-storage information storing member and specific information as inputted.

2. An information storage apparatus according to claim 1,
    wherein said specific number is made use of for encryption and decryption of said data.

3. An information storage apparatus according to claim 1,

wherein said specific number is made use of for controlling access to said data.

4.  An information storage apparatus according to claim 1,
    wherein said specific information is information specified by grouping environment information of said information processing system on a per predetermined species basis.

5.  An information storage apparatus according to claim 1,
    wherein said specific information is system environment information of a group using said information processing system.

6.  An information storage apparatus according to claim 1,
    wherein said specific information is file information held by a file itself reserved in said information storage apparatus.

7.  An information storage apparatus according to claim 1,
    wherein said specific information is definition information defined arbitrarily by user of said information processing system.

8.  An information storage apparatus according to claim 1,
    wherein said information storage apparatus is imparted with a function for sending to said information processing system the specific number added with unauthorized alteration preventing information for detecting unauthorized alteration of said specific number.

9.  An information storage apparatus according to claim 1,
    wherein said information storage apparatus is provided with an encryption key for randomizing said data on the basis of said specific number.

10. An information storage apparatus according to claim 6,
    wherein a plurality of said file information is held in a single file.

11. An information storage apparatus according to claim 10,
    wherein a plurality of specific numbers are generated on the basis of said plurality of file information held in said single file, and
    wherein access control is performed for a desired file on the basis of said plural specific numbers.

12. An information storage apparatus according to claim 1,
    wherein the information concerning said information storage apparatus is represented by an identification number inherent to a storing medium destined for storing data.

13. An information processing system equipped with an information storage apparatus for storing data,
    wherein said information storage apparatus includes
    intra-storage information storing member which stores information concerning said information storage apparatus; and
    specific number generating member which generates a specific number used for ensuring security of said data on the basis of the information concerning said information storage apparatus as stored in said intra-storage information storing member and specific information as inputted.

14. An information processing system according to claim 13,
    wherein said specific number is made use of for encryption and decryption of said data.

15. An information processing system according to claim 13,
    wherein said specific number is made use of for controlling access to said data.

16. An information processing system according to claim 13,
    wherein said information processing system is equipped with a plurality of said information storage apparatuses.

17. A specific number generating method of generating a specific number used for ensuring security of data, said method being carried out by an information storage apparatus capable of storing data used in an information processing system, comprising the steps of:

reading out information concerning said information storage apparatus; and
generating a predetermined specific number on the basis of the read-out information concerning said information storage apparatus and specific information as inputted.

18. A method of generating a specific number used for ensuring security of data in an information processing system comprised of a host and an information storage apparatus capable of storing the data,
said method comprising the steps of:

sending specific information to said information storage apparatus from said host;
receiving said specific information by said information storage apparatus to thereby generate said specific number on the basis of said specific information and information concerning said information storage apparatus and stored in said information storage apparatus; and
sending the generated specific number to said host.

19. A specific number generating program recorded on a computer-readable storing medium for the purpose of generating a specific number used for ensuring security of data, said program being executed by a computer provided in association with an information storage apparatus capable of storing data used in an information processing system;
wherein said specific number generating program causes said computer to execute the steps of:

reading out the information concerning said information storage apparatus; and
generating a predetermined specific number on the basis of the read-out information concerning said information storage apparatus and specific information as inputted.

20. A specific number generating program which is executed by a computer incorporated in an information processing system comprised of a host and an information storage apparatus capable of storing data for generating a specific number used for ensuring security of data, said program being recorded on a storing medium readable with said computer,
wherein said specific number generating program causes said computer to execute the steps of:

sending specific information to said information storage apparatus from said host;
receiving said specific information by said information storage apparatus to thereby generate the specific number on the basis of said specific information and information concerning said information storage apparatus and stored in said information storage apparatus; and
sending the generated specific number to said host.

# FIG. 1

1 INFORMATION STORAGE APPARATUS

**2** ARITHMETIC PROCESSING UNIT

**3** FIRST RAM

EXTERNAL INTERFACE ——

**4** INTERFACE CONTROL UNIT

**5** INFORMATION RECORDING MEDIUM CONTROL UNIT

**6** FIRST NONVOLATILE MEMORY

**7** INFORMATION RECORDING MEDIUM

EP 1 376 298 A2

# FIG. 2

CPU `12`

SECOND RAM `13`

SECOND NONVOLATILE MEMORY `14`

DISPLAY CONTROL CIRCUIT `15`

DISPLAY DEVICE `16`

INPUT UNIT `17`

INPUT UNIT CONTROL CIRCUIT `18`

INFORMATION STORAGE CONTROL CIRCUIT `19`

EXTERNAL INFORMATION STORAGE `1b`

HOST FUNCTION MODULE `11`

INTERNAL INFORMATION STORAGE `1a`

EP 1 376 298 A2

# FIG. 3

PROCESSINGS EXECUTED IN HOST

PROCESSINGS EXECUTED IN INFORMATION STORAGE

```
           START

             │
             ▼              S1
   ┌──┬──────────────────┬──┐
   │  │ GENERATE SPECIFIC │  │
   │  │ INFORMATION (SD)  │  │
   └──┴──────────────────┴──┘
             │
             ▼              S2
   ┌──┬──────────────────┬──┐
   │  │ SEND SPECIFIC     │  │
   │  │ INFORMATION (SD)  │  │
   └──┴──────────────────┴──┘
```

```
                               S3
             ┌──┬──────────────────┬──┐
             │  │ RECEIVE SPECIFIC  │  │
             │  │ INFORMATION (SD)  │  │
             └──┴──────────────────┴──┘
                        │
                        ▼            S4
             ┌──┬──────────────────┬──┐
             │  │ ACQUIRE INTRA-STORAGE │  │
             │  │ INFORMATION (DD)  │  │
             └──┴──────────────────┴──┘
                        │
                        ▼            S5
             ┌──┬──────────────────┬──┐
             │  │ GENERATE SPECIFIC NUMBER (ID): │  │
             │  │ ID = f (DD, SD)   │  │
             └──┴──────────────────┴──┘
                        │
                        ▼            S6
             ┌──┬──────────────────┬──┐
             │  │ SEND SPECIFIC NUMBER (ID) │  │
             └──┴──────────────────┴──┘
```

GENERATE SPECIFIC NUMBER (ID): $ID = f(DD, SD)$

```
             ▼              S7
   ┌──┬──────────────────┬──┐
   │  │ RECEIVE SPECIFIC  │  │
   │  │ NUMBER (ID)       │  │
   └──┴──────────────────┴──┘
             │
             ▼
            END
```

# FIG. 4

| SPECIFIC INFORMATION | INTRA-STORAGE INFORMATION | SPECIFIC NUMBER |
|---|---|---|
| 000001 | 00000001 | 00000001 |
| 000002 | 00000001 | 00000100 |
| 001985 | 00000001 | 10000000 |
| 000001 | 00077000 | 00010000 |
| 000002 | 00077000 | 00100000 |
| 002002 | 00077000 | 10000001 |

# FIG. 5

PROCESSINGS EXECUTED IN HOST

PROCESSINGS EXECUTED IN INFORMATION STORAGE

START

S11

ISSUE FILE READ REQUEST BY USER

S12

ACQUIRE USER NUMBER TO SET AS SPECIFIC INFORMATION (SD)

S13

SEND SPECIFIC INFORMATION (SD)

S14

RECEIVE SPECIFIC INFORMATION (SD)

S15

ACQUIRE INTRA-STORAGE INFORMATION (DD)

S16

GENERATE SPECIFIC NUMBER (ID): ID = f (DD, SD)

S17

SEND SPECIFIC NUMBER (ID)

S18

RECEIVE SPECIFIC NUMBER (ID)

END

23

# FIG. 6

PROCESSINGS EXECUTED IN HOST

PROCESSINGS EXECUTED IN
INFORMATION STORAGE

START

**S21** SET FILE NAME AS SPECIFIC INFORMATION (SD)

**S22** SEND SPECIFIC INFORMATION (SD)

**S23** RECEIVE SPECIFIC INFORMATION (SD)

**S24** ACQUIRE INTRA-STORAGE INFORMATION (DD)

**S25** GENERATE SPECIFIC NUMBER (ID):
ID = f (DD, SD)

**S26** SEND SPECIFIC NUMBER (ID)

**S27** RECEIVE SPECIFIC NUMBER (ID)

END

# FIG. 7

| FILE NAME AS SPECIFIC INFORMATION | INTRA-STORAGE INFORMATION | SPECIFIC NUMBER |
|---|---|---|
| Abc.txt | 00000001 | 00000002 |
| Def.doc | 00000001 | 00000400 |
| Ghi.jpg | 00000001 | 80000000 |

# FIG. 8A

FILE STRUCTURE

```
¥ ─┬─ Abc.txt
   ├─ Def.doc
   ├─ Ghi.jpg
   ├─ Ctrl.dat
   └─ 12345 ─┬─ 12Abc.txt
             ├─ 12Def.doc
             ├─ 12Ghi.jpg
             └─ Ctrl.dat
```

# FIG. 8B

CONTENTS OF FILE "Ctrl.dat"
IN ROOT FOLDER

| FILE NAME | SPECIFIC INFORMATION |
|---|---|
| Abc.txt | 10000 |
| Def.doc | 10001 |
| Ghi.jpg | 10000 |

25

# FIG. 9

PROCESSINGS EXECUTED IN HOST

PROCESSINGS EXECUTED IN
INFORMATION STORAGE

START

**S31** ISSUE FILE READ REQUEST BY USER

**S32** READ SPECIFIC INFORMATION FILE (Ctrl.dat)

**S33** ACQUIRE SPECIFIC INFORMATION BY REFERENCING FILE NAME

**S34** SEND SPECIFIC INFORMATION (SD)

**S35** RECEIVE SPECIFIC INFORMATION (SD)

**S36** ACQUIRE INTRA-STORAGE INFORMATION (DD)

**S37** GENERATE SPECIFIC NUMBER (ID): ID = f (DD, SD)

**S38** SEND SPECIFIC NUMBER (ID)

**S39** RECEIVE SPECIFIC NUMBER (ID)

END

# FIG.10

| FILE NAME | SPECIFIC INFORMATION | INTRA-STORAGE INFORMATION | SPECIFIC NUMBER |
|-----------|---------------------|--------------------------|-----------------|
| Abc.txt | 10000 | 00000001 | 00000012 |
| Def.doc | 10001 | 00000001 | 00001400 |
| Ghi.jpg | 10000 | 00000001 | 90000000 |

# FIG.11

HOST FUNCTION MODULE 11

- CPU 12
- RAM 13
- NONVOLATILE MEMORY 14
  - ENCRYPTION KEY 20
- DISPLAY CONTROL CIRCUIT 15
- INPUT UNIT CONTROL CIRCUIT 18
- INFORMATION STORAGE CONTROL CIRCUIT 19

INPUT UNIT 17

DISPLAY DEVICE 16

EXTERNAL INFORMATION STORAGE 1b
- ENCRYPTION KEY 20

INTERNAL INFORMATION STORAGE 1a
- ENCRYPTION KEY 20

EP 1 376 298 A2

# FIG.12

PROCESSINGS EXECUTED IN HOST

PROCESSINGS EXECUTED IN
INFORMATION STORAGE

START

**S41** GENERATE SPECIFIC INFORMATION (SD)

**S42** GENERATE RANDOM NUMBER (RND)

**S43** GENERATE SEND DATA (DS): DS = Ek(SD // RND)

**S44** DELIVER SEND DATA (DS)

**S45** RECEIVE SEND DATA (DS)

**S46** ACQUIRE SPECIFIC INFORMATION (SD) AND RANDOM NUMBER (RND) FROM RECEIVED SEND DATA (DS)

**S47** ACQUIRE INTRA-STORAGE INFORMATION (DD)

**S48** GENERATE SPECIFIC NUMBER (ID): ID = f (DD, SD)

**S49** ENCRYPT RANDOM NUMBER: Ek (RND)

**S50** GENERATE RECEIVE DATA(DR) DR = ID // Ek (RND)

**S51** DELIVER RECEIVE DATA (DR)

**S52** RECEIVE DATA (DR) FROM INFORMATION STORAGE

**S53** SEPARATE SPECIFIC NUMBER (ID) AND RANDOM NUMBER PART (Ek(RND)) FROM RECEIVED DATA (DR)

**S54** DECRYPT RANDOM NUMBER DATA: RND' = DK(Ek(RND))

**S55** RND=RND' ? — NO → TERMINATE PROCEDURE WITH ABNORMALITY INDICATION

YES

**S56** ACCEPT SPECIFIC NUMBER (ID)

END

# FIG.13

PROCESSINGS EXECUTED IN HOST

PROCESSINGS EXECUTED IN
INFORMATION STORAGE

START

S61

START WRITE PROCESSING
BY USER

S62

GENERATE SPECIFIC NUMBER (ID) BY USING SPECIFIC INFORMATION (SD)

S63

EXECUTE PROCESSING FOR
ENCRYPTING USER DATA BY
USING SPECIFIC NUMBER (ID)
AS KEY

S64

SEND DATA TO BE WRITTEN

S65

WRITE DATA ON STORAGE

END

# FIG.14

PROCESSINGS EXECUTED IN HOST

PROCESSINGS EXECUTED IN
INFORMATION STORAGE

START

**S71**

START READ OPERATION
BY USER

**S72**

GENERATE SPECIFIC NUMBER (ID) BY USING SPECIFIC INFORMATION (SD)

**S73**

READ OUT DATA

**S74**

RECEIVE READ DATA

**S75**

EXECUTE DECRYPT
PROCESSING OF USER DATA
BY USING SPECIFIC
NUMBER (ID) AS KEY

END

# FIG.15A

FILE STRUCTURE

```
¥ ——————— Abc.txt
        ├─── Def.doc
        ├─── Ghi.jpg
        ├─── Ctrl.dat
        └─── 12345 ————— 12Abc.txt
                     ├─── 12Def.doc
                     ├─── 12Ghi.jpg
                     └─── Ctrl.dat
```

# FIG.15B

CONTENTS OF FILE "Ctrl.dat"
IN ROOT FOLDER

| (FILE NAME) | (SD) | (IDA) |
|---|---|---|
| Abc.txt | 10000 | 80000 |
| Def.doc | 10001 | 80010 |
| Ghi.jpg | 10000 | 80000 |

# FIG.16

PROCESSINGS EXECUTED IN HOST

PROCESSINGS EXECUTED IN
INFORMATION STORAGE

START

S81

ISSUE FILE CREATION REQUEST
BY USER

S82

GENERATE READ-ORIENTED
SPECIFIC INFORMATION (SD)

S83

SEND READ-ORIENTED
SPECIFIC INFORMATION (SD)

S84

RECEIVE READ-ORIENTED
SPECIFIC INFORMATION (SD)

S85

ACQUIRE INTRA-STORAGE
INFORMATION (DD)

S86

GENERATE SPECIFIC NUMBER (IDA):
IDA = f (DD, SD)

S87

SEND SPECIFIC NUMBER (IDA)

S88

RECEIVE SPECIFIC NUMBER (IDA)

S89

SAVE FILE NAME, READ-ORIENTED
SPECIFIC INFORMATION (SD) AND
SPECIFIC NUMBER (IDA) CONTAINED
IN SPECIFIC INFORMATION FILE
(Ctrl.dat)

END

33

# FIG.17

PROCESSINGS EXECUTED IN HOST

PROCESSINGS EXECUTED IN INFORMATION STORAGE

START

**S91** ISSUE FILE READ REQUEST BY USER

**S92** READ SPECIFIC INFORMATION RESERVING FILE (Ctrl.dat)

**S93** ACQUIRE READ-ORIENTED SPECIFIC INFORMATION (SD) BY REFERENCING FILE NAME

**S94** SEND READ-ORIENTED SPECIFIC INFORMATION (SD)

**S95** RECEIVE READ-ORIENTED SPECIFIC INFORMATION (SD)

**S96** ACQUIRE INTRA-STORAGE INFORMATION (DD)

**S97** GENERATE SPECIFIC NUMBER (IDD): IDD = f (DD, SD)

**S98** SEND SPECIFIC NUMBER (IDD)

**S99** RECEIVE SPECIFIC NUMBER (IDD)

**S100** ACQUIRE READ-ORIENTED SPECIFIC NUMBER (IDA) FROM SPECIFIC INFORMATION RESERVING FILE (Ctrl.dat) BY REFERENCING FILE NAME

**S101** IDA=IDD?    NO

YES

**S102** PERFORM FILE READ/WRITE OPERATION

TERMINATE PROCEDURE WITH ABNORMALITY INDICATION

END

# FIG.18A

FILE STRUCTURE

¥ ——— Abc.txt

—— Def.doc

—— Ghi.jpg

—— Ctrl.dat

—— 12345 ——— 12Abc.txt

—— 12Def.doc

—— 12Ghi.jpg

—— Ctrl.dat

# FIG.18B

CONTENTS OF FILE "Ctrl.dat"
IN ROOT FOLDER

| (FILE NAME) | (SDRead) | (SDWrite) | (IDRead) | (IDWrite) |
|---|---|---|---|---|
| Abc.txt | 10000 | 20000 | 80000 | 90000 |
| Def.doc | 10001 | 20001 | 80010 | 91000 |
| Ghi.jpg | 10000 | 20001 | 80000 | 91000 |

# FIG.19

PROCESSINGS EXECUTED IN HOST

PROCESSINGS EXECUTED IN INFORMATION STORAGE

START

S111 ISSUE FILE CREATION REQUEST BY USER

S112 GENERATE READ-ORIENTED SPECIFIC INFORMATION (SDRead)

S113 SEND READ-ORIENTED SPECIFIC INFORMATION (SDRead)

S114 RECEIVE READ-ORIENTED SPECIFIC INFORMATION (SDRead)

S115 ACQUIRE INTRA-STORAGE INFORMATION (DD)

S116 GENERATE SPECIFIC NUMBER (ID): ID = f (DD, SDRead)

S117 SEND SPECIFIC NUMBER (ID)

S118 RECEIVE SPECIFIC NUMBER (ID) AS IDRead

S119 GENERATE WRITE-ORIENTED SPECIFIC INFORMATION (SDWrite)

S120 SEND WRITE-ORIENTED SPECIFIC INFORMATION (SDWrite)

S121 RECEIVE WRITE-ORIENTED SPECIFIC INFORMATION (SDWrite)

S122 ACQUIRE INTRA-STORAGE INFORMATION (DD)

S123 GENERATE SPECIFIC NUMBER (ID): ID = f (DD, SD)

S124 SEND SPECIFIC NUMBER (ID)

S125 RECEIVE SPECIFIC NUMBER (ID) AS IDWrite

S126 SAVE FILE NAME, READ-ORIENTED SPECIFIC INFORMATION (SDRead), WRITE-ORIENTED SPECIFIC INFORMATION (SDWrite), READ-ORIENTED SPECIFIC NUMBER (IDRead) AND WRITE-ORIENTED SPECIFIC NUMBER (IDWrite) IN SPECIFIC INFORMATION RESERVING FILE (Ctrl.dat)

END

# FIG.20

PROCESSINGS EXECUTED IN HOST     PROCESSINGS EXECUTED IN INFORMATION STORAGE

START

S131
ISSUE FILE READ REQUEST BY USER

S132
READ SPECIFIC INFORMATION RESERVING FILE (Ctrl.dat)

S135
RECEIVE READ-ORIENTED SPECIFIC INFORMATION (SDRead)

S133
ACQUIRE READ-ORIENTED SPECIFIC INFORMATION (SDRead) BY REFERENCING FILE NAME

S136
ACQUIRE INTRA-STORAGE INFORMATION (DD)

S134
SEND READ-ORIENTED SPECIFIC INFORMATION (SDRead)

S137
GENERATE SPECIFIC NUMBER (ID):
ID = f (DD, SDRead)

S138
SEND SPECIFIC NUMBER (ID)

S139
RECEIVE SPECIFIC NUMBER (ID)

S140
ACQUIRE READ-ORIENTED SPECIFIC NUMBER (IDRead) FROM SPECIFIC INFORMATION RESERVING FILE (Ctrl.dat) BY REFERENCING FILE NAME

S141
ID = IDRead?    NO

YES

S142
PERFORM FILE READ OPERATION

TERMINATE PROCEDURE WITH ABNORMALITY INDICATION

END

# FIG.21

PROCESSINGS EXECUTED IN HOST

PROCESSINGS EXECUTED IN INFORMATION STORAGE

START

S151

ISSUE FILE WRITE REQUEST BY USER

S152

READ SPECIFIC INFORMATION RESERVING FILE (Ctrl.dat)

S153

ACQUIRE WRITE-ORIENTED SPECIFIC INFORMATION (SDWrite) BY REFERENCING FILE NAME

S154

SEND WRITE-ORIENTED SPECIFIC INFORMATION (SDWrite)

S155

RECEIVE WRITE-ORIENTED SPECIFIC INFORMATION (SDWrite)

S156

ACQUIRE INTRA-STORAGE INFORMATION (DD)

S157

GENERATE SPECIFIC NUMBER (ID): ID = f (DD, SDWrite)

S158

SEND SPECIFIC NUMBER (ID)

S159

RECEIVE SPECIFIC NUMBER (ID)

S160

ACQUIRE WRITE-ORIENTED SPECIFIC NUMBER (IDWrite) FROM SPECIFIC INFORMATION RESERVING FILE (Ctrl.dat) BY REFERENCING FILE NAME

S161

ID = IDWrite?

NO

YES

S162

PERFORM FILE WRITE OPERATION

TERMINATE PROCEDURE WITH ABNORMALITY INDICATION

END

# FIG.22

**HOST FUNCTION MODULE** — 11

- CPU — 12
- RAM — 13
- NONVOLATILE MEMORY — 14
  - ENCRYPTION KEY — 20
- DISPLAY CONTROL CIRCUIT — 15
- DISPLAY DEVICE — 16
- INPUT UNIT — 17
- INPUT UNIT CONTROL CIRCUIT — 18
- INFORMATION STORAGE CONTROL CIRCUIT — 19
- INTERNAL INFORMATION STORAGE — 1a
  - ENCRYPTION KEY — 20
  - STORING MEDIUM INHERENT NUMBER — 21
- EXTERNAL INFORMATION STORAGE — 1b
  - ENCRYPTION KEY — 20
  - STORING MEDIUM INHERENT NUMBER — 21

# FIG.23A

FILE STRUCTURE

¥ ——┬—— Abc.txt

├—— Def.doc

├—— Ghi.jpg

├—— Ctrl.dat

└—— 12345 ——┬—— 12Abc.txt

├—— 12Def.doc

├—— 12Ghi.jpg

└—— Ctrl.dat

# FIG.23B

CONTENTS OF FILE "Ctrl.dat" IN ROOT
FOLDER

| (FILE NAME) | (SDRead) | (IDRead)) | (IDDisk) |
|---|---|---|---|
| Abc.txt | 10000 | 80000 | 1234567 |
| Def.doc | 10001 | 80010 | 1234567 |
| Ghi.jpg | 10000 | 80000 | 1234567 |

# FIG.24

PROCESSINGS EXECUTED IN HOST

PROCESSINGS EXECUTED IN
INFORMATION STORAGE

START

S171
ISSUE FILE CREATION
REQUEST BY USER

S172
GENERATE READ-ORIENTED
SPECIFIC INFORMATION
(SDRead)

S173
SEND READ-ORIENTED
SPECIFIC INFORMATION
(SDRead)

S174
RECEIVE READ-ORIENTED
SPECIFIC INFORMATION
(SDRead)

S175
ACQUIRE INTRA-STORAGE
INFORMATION (DD)

S176
GENERATE SPECIFIC NUMBER (ID):
ID = f (DD, SDRead)

S177
SEND SPECIFIC NUMBER (ID)

S178
ACQUIRE STORAGE MEDIUM
INHERENT NUMBER (IDDisk)

S179
SAVE FILE NAME, READ-ORIENTED
SPECIFIC INFORMATION (SDRead),
SPECIFIC NUMBER (IDRead) AND
STORAGE MEDIUM INHERENT
NUMBER (IDDisk) IN SPECIFIC
INFORMATION FILE (Ctrl.dat)

END

# FIG.25

PROCESSINGS EXECUTED IN HOST

PROCESSINGS EXECUTED IN INFORMATION STORAGE

( START )

S181
ISSUE FILE READ REQUEST BY USER

S182
READ SPECIFIC INFORMATION RESERVING FILE (Ctrl.dat)

S183
ACQUIRE READ-ORIENTED SPECIFIC INFORMATION (SDRead) BY REFERENCING FILE NAME

S184
SEND READ-ORIENTED SPECIFIC INFORMATION (SDRead)

S185
RECEIVE READ-ORIENTED SPECIFIC INFORMATION (SDRead)

S186
ACQUIRE INTRA-STORAGE INFORMATION (DD)

S187
GENERATE SPECIFIC NUMBER (IDD): IDD = f (DD, SDRead)

S188
SEND SPECIFIC NUMBER (ID)

S189
RECEIVE SPECIFIC NUMBER (ID)

S190
ACQUIRE READ-ORIENTED SPECIFIC NUMBER (IDRead) FROM SPECIFIC INFORMATION RESERVING FILE (Ctrl.dat) BY REFERENCING FILE NAME

S191
ID=IDRead?
YES
NO

S192
PERFORM FILE READ OPERATION

TERMINATE PROCEDURE WITH ABNORMALITY INDICATION

( END )

# FIG.26

PROCESSINGS EXECUTED IN HOST

PROCESSINGS EXECUTED IN
INFORMATION STORAGE

START

S201
ISSUE FILE WRITE REQUEST
BY USER

S202
READ SPECIFIC INFORMATION
RESERVING FILE (Ctrl.dat)

S203
ACQUIRE WRITE–ORIENTED
SPECIFIC NUMBER (IDWrite)
FROM SPECIFIC INFORMATION
RESERVING FILE (Ctrl.dat) BY
REFERENCING FILE NAME

S204
ACQUIRE STORAGE MEDIUM
INHERENT NUMBER (IDDisk)

S205
IDWrite＝IDDisk?
NO
YES

S206
PERFORM FILE WRITE
OPERATION

TERMINATE PROCEDURE
WITH ABNORMALITY
INDICATION

END

# FIG.27

CPU 12

RAM 13

NONVOLATILE MEMORY 14

DISPLAY CONTROL CIRCUIT 15

DISPLAY DEVICE 16

INPUT UNIT 17

INPUT UNIT CONTROL CIRCUIT 18

INFORMATION STORAGE CONTROL CIRCUIT 19

HOST FUNCTION MODULE 11

INTERNAL INFORMATION STORAGE 1a

INTERNAL INFORMATION STORAGE 1a'

EP 1 376 298 A2